# EUROPÄISCHE PATENTANMELDUNG

(11) **EP 4 052 563 A2**
(43) Veröffentlichungstag der Anmeldung: **07.09.2022**
(21) Anmeldenummer: 22154397.8
(22) Anmeldetag: 01.02.2022
(51) Int. Cl.: A01D 75/18, A01D 34/00, B60B 7/00, B60B 33/00

(54) **LENKROLLENVORRICHTUNG, RASENMÄHER MIT DER LENKROLLENVORRICHTUNG UND VERFAHREN ZUR MONTAGE DER LENKROLLENVORRICHTUNG**

(30) Priorität: 01.03.2021 DE 102021201899
(71) Anmelder: Robert Bosch GmbH, 70442 Stuttgart (DE)
(72) Erfinder: Stevens, Glyn, Bodorgan, LL62 5PR (GB); Reynolds, Dave, Bury St. Edmunds, IP32 7LJ (GB); Mitro, Lajos, Stowmarket, IP145FQ (GB); Armstrong, Gavin Ben, Tostock Suffork, IP309GH (GB)

(57) **Zusammenfassung**

Die Erfindung geht aus von einer Lenkrollenvorrichtung, insbesondere für einen Rasenmäher, mit zumindest einer, insbesondere genau einer, Rolle (22a; 22b; 22c), mit zumindest einer Rollenhalteeinheit (24a; 24b; 24c), welche die Rolle (22a; 22b; 22c) zumindest teilweise umgreift, mit zumindest einer Lagereinheit (26a; 26b; 26c) zu einer beweglichen Lagerung der Rolle (22a; 22b; 22c) an der Rollenhalteeinheit (24a; 24b; 24c) um eine Drehachse (28a; 28b; 28c), und mit zumindest einer Antiblockiereinheit (30a; 30b; 30c), die dazu vorgesehen ist, einer unerwünschten Blockierung der Rolle (22a; 22b; 22c) durch Fremdkörper, insbesondere infolge einer Verschmutzung, entgegenzuwirken, wobei die Antiblockiereinheit (30a; 30b; 30c) zumindest ein Abdeckelement (46a; 46b; 46c) umfasst, das dazu vorgesehen ist, die Rolle (22a; 22b; 22c) und die Lagereinheit (26a; 26b; 26c) entlang zumindest einer zumindest im Wesentlichen parallel zur Drehachse (28a; 28b; 28c) ausgerichteten Richtung jeweils zumindest teilweise zu verdecken, wobei das zumindest eine Abdeckelement (46a; 46b; 46c) relativ zur Rollenhalteeinheit (24a; 24b; 24c) um die Drehachse (28a; 28b; 28c) zumindest im Wesentlichen unbeweglich ausgebildet ist.

Es wird vorgeschlagen, dass das Abdeckelement (46a; 46b; 46c) zumindest eine Außenfläche (48a; 48b; 48c) aufweist, die in einem radialen Randbereich (50a; 50b; 50c) des Abdeckelements (46a; 46b; 46c), welcher sich zumindest im Wesentlichen vollständig um eine Mittelachse (52a; 52b; 52c) des Abdeckelements (46a; 46b; 46c) erstreckt, um die Mittelachse (52a; 52b; 52c) des Abdeckelements (46a; 46b; 46c) rotationssymmetrisch ausgebildet ist.

## Beschreibung

### Stand der Technik

Es ist bereits eine Lenkrollenvorrichtung mit zumindest einer Rolle, mit zumindest einer Rollenhalteeinheit, welche die Rolle zumindest teilweise umgreift, mit zumindest einer Lagereinheit zu einer beweglichen Lagerung der Rolle an der Rollenhalteeinheit um eine Drehachse, und mit zumindest einer Antiblockiereinheit, die dazu vorgesehen ist, einer unerwünschten Blockierung der Rolle durch Fremdkörper, insbesondere infolge einer Verschmutzung, entgegenzuwirken, wobei die Antiblockiereinheit zumindest ein Abdeckelement umfasst, das dazu vorgesehen ist, die Rolle und die Lagereinheit entlang zumindest einer zumindest im Wesentlichen parallel zur Drehachse ausgerichteten Richtung jeweils zumindest teilweise zu verdecken, wobei das zumindest eine Abdeckelement relativ zur Rollenhalteeinheit um die Drehachse zumindest im Wesentlichen unbeweglich ausgebildet ist, vorgeschlagen worden.

### Offenbarung der Erfindung

Die Erfindung geht aus von einer Lenkrollenvorrichtung, insbesondere für einen Rasenmäher, mit zumindest einer, insbesondere genau einer, Rolle, mit zumindest einer Rollenhalteeinheit, welche die Rolle zumindest teilweise umgreift, mit zumindest einer Lagereinheit zu einer beweglichen Lagerung der Rolle an der Rollenhalteeinheit um eine Drehachse, und mit zumindest einer Antiblockiereinheit, die dazu vorgesehen ist, einer unerwünschten Blockierung der Rolle durch Fremdkörper, insbesondere infolge einer Verschmutzung, entgegenzuwirken, wobei die Antiblockiereinheit zumindest ein Abdeckelement umfasst, das dazu vorgesehen ist, die Rolle und die Lagereinheit entlang zumindest einer zumindest im Wesentlichen parallel zur Drehachse ausgerichteten Richtung jeweils zumindest teilweise zu verdecken, wobei das zumindest eine Abdeckelement relativ zur Rollenhalteeinheit um die Drehachse zumindest im Wesentlichen unbeweglich ausgebildet ist.

Es wird vorgeschlagen, dass das Abdeckelement zumindest eine Außenfläche aufweist, die in einem radialen Randbereich des Abdeckelements, welcher sich zumindest im Wesentlichen vollständig um eine Mittelachse des Abdeckelements erstreckt, um die Mittelachse des Abdeckelements rotationssymmetrisch ausgebildet ist.

Vorzugsweise erstreckt sich der radiale Randbereich entlang der Mittelachse des Abdeckelements betrachtet von einer äußeren Kontur des Abdeckelements radial zur Mittelachse des Abdeckelements hin über mindestens 0,5 cm, vorzugsweise mindestens 1 cm und bevorzugt mindestens 1,5 cm. Bevorzugt weist der radiale Randbereich entlang der Mittelachse des Abdeckelements betrachtet eine zumindest im Wesentlichen kreisringförmige Grundform auf. Insbesondere erstreckt sich der radiale Randbereich entlang der Mittelachse des Abdeckelements betrachtet zumindest im Wesentlichen vollständig, vorzugsweise in einem Winkel von mindestens 340°, vorzugsweise mindestens 350° und bevorzugt zumindest im Wesentlichen 360°, um die Mittelachse des Abdeckelements. Insbesondere ist die Drehachse und/oder die Mittelachse des Abdeckelements beabstandet von der Außenfläche des Abdeckelements angeordnet und schneidet diese insbesondere nicht. Bevorzugt ist eine Kontur des Abdeckelements im Bereich der Außenfläche innerhalb einer die Mittelachse des Abdeckelements umfassenden Schnittebene des Abdeckelements betrachtet an jeder Position um die Mittelachse des Abdeckelements zumindest im Wesentlichen identisch ausgebildet. Vorzugsweise ist die, insbesondere innerhalb einer die Mittelachse des Abdeckelements umfassenden Schnittebene des Abdeckelements betrachtete, Kontur des Abdeckelements im Bereich der Außenfläche rund oder zumindest im Wesentlichen geradlinig ausgebildet. Unter "im Wesentlichen geradlinig" soll insbesondere eine Ausgestaltung einer Strecke, insbesondere eine Strecke entlang der Kontur, verstanden werden, wobei die Strecke im Wesentlichen entlang einer Haupterstreckungsachse der Strecke verläuft, wobei jeder Punkt auf der Strecke senkrecht zur Haupterstreckungsachse der Strecke einen maximalen Abstand zur Haupterstreckungsachse der Strecke von höchstens 5%, vorzugsweise höchstens 3% und bevorzugt höchstens 1%, einer maximalen Längserstreckung der Strecke aufweist. Insbesondere falls die Kontur des Abdeckelements im Bereich der Außenfläche rund ausgebildet ist, weist die Kontur einen Krümmungsradius auf, der höchstens einem Doppelten einer maximalen radialen Erstreckung der Kontur senkrecht zur Mittelachse des Abdeckelements entspricht. Insbesondere falls die Kontur des Abdeckelements im Bereich der Außenfläche zumindest im Wesentlichen geradlinig ausgebildet ist, weist die Kontur zu der Mittelachse des Abdeckelements einen minimalen Winkel von mindestens 45°, vorzugsweise mindestens 65° und bevorzugt mindestens 80°, auf, vorzugsweise in einer virtuellen Verlängerung der Kontur. Insbesondere ist die Kontur beabstandet von der Mittelachse des Abdeckelements ausgebildet. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt.

Bevorzugt begrenzt das Abdeckelement in einem Nahbereich der Mittelachse des Abdeckelements um die Mittelachse des Abdeckelements herum eine Aussparung. Insbesondere erstreckt sich der Nahbereich der Mittelachse des Abdeckelements innerhalb eines senkrecht zur Mittelachse des Abdeckelements ausgerichteten radialen Abstands um die Mittelachse des Abdeckelements von höchstens 1,5 cm, vorzugsweise höchstens 1 cm und bevorzugt höchstens 0,75 cm. Vorzugsweise verläuft die Drehachse in einem montierten Zustand des Abdeckelements durch die Aussparung und schneidet das Abdeckelement vorzugsweise nicht. Bevorzugt bildet das Abdeckelement eine Wandung aus, welche sich um die Mittelachse des Abdeckelements erstreckt und die Aussparung begrenzt. Insbesondere erstreckt sich die Wandung über eine maximale Erstreckung des Abdeckelements, welche zumindest im Wesentlichen parallel zur Mittelachse des Abdeckelements ausgerichtet ist. Bevorzugt ist eine Innenfläche der Wandung, welche die Aussparung begrenzt, in einer die Mittelachse des Abdeckelements umfassenden Schnittebene betrachtet zumindest im Wesentlichen parallel zur Mittelachse des Abdeckelements ausgerichtet. Unter "im Wesentlichen parallel" soll insbesondere eine Ausrichtung einer Geraden, einer Ebene oder einer Richtung, insbesondere eine Gerade entlang der vorher genannten Innenfläche der Wandung, relativ zu einer anderen Geraden, einer anderen Ebene oder einer Bezugsrichtung, insbesondere einer von der Drehachse umfassten Geraden, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2°, aufweist. In einer bevorzugten Ausgestaltung begrenzt die Wandung an einer von der Mittelachse des Abdeckelements abgewandten Seite die Außenfläche des Abdeckelements.

Die Außenfläche des Abdeckelements ist, insbesondere in dem montierten Zustand, an einer der Rolle abgewandten Seite des Abdeckelements angeordnet. Insbesondere umfasst die Drehachse die Mittelachse des Abdeckelements in dem montierten Zustand des Abdeckelements. Bevorzugt weisen das Abdeckelement und eine, insbesondere senkrecht zur Drehachse betrachtet äußerste, Seitenfläche der Rolle, in einem montierten Zustand, entlang der Drehachse betrachtet, insbesondere in einer sich senkrecht zur Drehachse erstreckenden Schnittebene durch das Abdeckelement und die Rolle betrachtet, radial zur Drehachse einen minimalen Abstand von höchstens 1,5 mm, vorzugsweise höchstens 1,25 mm und bevorzugt höchstens 1 mm, auf. Insbesondere bildet die Rolle zumindest eine Innenfläche aus, welche zumindest im Wesentlichen parallel zur Drehachse ausgerichtet ist und, insbesondere in einem montierten Zustand, an einer dem zumindest einen Abdeckelement zugewandten Innenseite der Rolle angeordnet ist. Besonders bevorzugt beträgt ein radial zur Drehachse ausgerichteter minimaler Abstand zwischen der Innenfläche der Rolle und dem Abdeckelement, insbesondere der äußeren Kante des Abdeckelements, entlang der Drehachse betrachtet höchstens 1,5 mm, vorzugsweise höchstens 1,25 mm und bevorzugt höchstens 1 mm. Alternativ ist denkbar, dass das zumindest eine Abdeckelement entlang der Drehachse betrachtet, insbesondere in einer sich senkrecht zur Drehachse erstreckenden Schnittebene durch das Abdeckelement und die Rolle betrachtet, die/eine Seitenfläche der Rolle zumindest teilweise überdeckt. Darunter, dass "das zumindest eine Abdeckelement relativ zur Rollenhalteeinheit um die Drehachse zumindest im Wesentlichen unbeweglich ausgebildet ist" soll insbesondere verstanden werden, dass das zumindest eine Abdeckelement nicht zusammen mit der Rolle ausgebildet ist und einer Bewegung der Rolle um die Drehachse nicht folgt. Vorzugsweise ist das Abdeckelement gegenüber einer Bewegung um die Drehachse an der Rollenhalteeinheit fixiert. Vorzugsweise ist das zumindest eine Abdeckelement relativ zur Rollenhalteeinheit drehfest, insbesondere um die Drehachse, ausgebildet. Alternativ ist denkbar, dass das zumindest eine Abdeckelement an der Rollenhalteeinheit bewegbar angeordnet ist. Bevorzugterweise ist das zumindest eine Abdeckelement beabstandet von der Rolle angeordnet.

Vorzugsweise umfasst die Antiblockiereinheit mehr als ein, insbesondere genau zwei, Abdeckelement(e), welche insbesondere an entlang der Drehachse ausgebildeten Stirnseiten der Rolle angeordnet sind bzw. diese ausbilden. Alternativ ist denkbar, dass die Lenkrollenvorrichtung, insbesondere die Antiblockiereinheit, genau ein Abdeckelement umfasst, beispielsweise falls die Rollenhalteeinheit lediglich auf einer Seite der Rolle angeordnet ist. Beispielsweise umfasst die Antiblockiereinheit eine andere Abdeckung für die halterungsfreie Seite oder die Rolle ist über eine Aufhängung nur einseitig verankert, wobei insbesondere die andere Seite der Rolle nicht abgedeckt wird/werden muss. Vorzugsweise sind die zwei Abdeckelemente zumindest im Wesentlichen baugleich ausgebildet. Insbesondere sind die zwei Abdeckelemente an zwei voneinander abgewandten Seiten der Rolle angeordnet.

Vorzugsweise umgreift die Rollenhalteeinheit die Rolle entlang zumindest einer senkrecht zur Drehachse ausgerichteten Richtung betrachtet, insbesondere bei einer einseitigen Halterung der Rolle, über einen Winkelbereich von mindestens 90° oder, insbesondere bei einer beidseitigen Halterung der Rolle, über einen Winkelbereich von mindestens 180°. Die Rollenhalteeinheit umfasst bevorzugt zumindest eine Aufhängung zu einem Umgreifen und einem Halten der Rolle. Die Aufhängung ist insbesondere zumindest teilweise bügelförmig ausgebildet. Die Rollenhalteeinheit umfasst vorzugsweise zumindest ein Rollenachsenelement, wobei insbesondere die Rolle über die Lagereinheit an dem Rollenachsenelement um die Drehachse beweglich gelagert ist. Bevorzugt ist die Aufhängung dazu vorgesehen, das zumindest eine Rollenachsenelement zu halten. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist die Rolle und das zumindest eine Rollenachsenelement über die Aufhängung an dem Gerät, insbesondere dem Rasenmäher, befestigt. Insbesondere ist das zumindest eine Rollenachsenelement gegenüber einer Bewegung um die Drehachse an der Aufhängung fixiert. In einer bevorzugten Ausgestaltung ist das zumindest eine Rollenachsenelement über eine Schraubverbindung, welche insbesondere entlang einer parallel zur Drehachse ausgerichteten Richtung befestigbar und/oder lösbar ist, an der Aufhängung befestigt. Das zumindest eine Rollenachsenelement weist vorzugsweise zumindest eine Haupterstreckungsachse auf, welche, insbesondere in dem montierten Zustand, parallel zur Drehachse ausgerichtet ist. Besonders bevorzugt umfasst die Drehachse die Haupterstreckungsachse des Rollenachsenelements. Vorzugsweise ist das zumindest eine Rollenachsenelement stabförmig bzw. zylinderförmig ausgebildet. Bevorzugt ist das zumindest eine Rollenachsenelement zumindest teilweise hohl ausgebildet.

Vorzugsweise umfasst die Lagereinheit zumindest ein, insbesondere zwei, Kugellager. Bevorzugt ist die Lagereinheit dazu vorgesehen, die Rolle an dem zumindest einen Rollenachsenelement zu halten und um die Drehachse beweglich zu lagern. Vorzugsweise ist die Rolle über die Lagereinheit und/oder die Rollenhalteeinheit, insbesondere das zumindest eine Rollenachsenelement, gegenüber einer entlang der Drehachse ausgerichteten Bewegung fixiert. Bevorzugt ist/sind das/die Kugellager mit einer Lagerinnenfläche an dem zumindest einen Rollenachsenelement angeordnet, insbesondere befestigt. Vorzugsweise ist/sind das/die Kugellager mit einer Lageraußenfläche an der Rolle, insbesondere einer Innenfläche der Rolle, angeordnet, insbesondere befestigt.

Bevorzugt umfasst die Lenkrollenvorrichtung zumindest eine Lenkrollenlagereinheit zumindest teilweise. Die Lenkrollenlagereinheit ist bevorzugt dazu vorgesehen, zumindest die Rolle, die Antiblockiereinheit und die Rollenhalteeinheit um eine Lenkachse drehbar an einem Gerät, insbesondere dem Rasenmäher, zu lagern. Insbesondere ist denkbar, dass die Lenkrollenlagereinheit zumindest teilweise an dem Gerät, insbesondere dem Rasenmäher, angeordnet ist bzw. als Teil des Rasenmähers ausgebildet ist. Vorzugsweise umfasst die Lenkrollenlagereinheit zumindest einen Lagerbolzen, welcher an der Rollenhalteeinheit befestigt ist. Bevorzugt erstreckt sich eine Haupterstreckungsachse des Lagerbolzens quer, bevorzugt zumindest im Wesentlichen senkrecht, zur Drehachse.

Durch die erfindungsgemäße Ausgestaltung der Lenkrollenvorrichtung kann eine vorteilhaft kantenfreie und gleichmäßige Außenfläche in einem Übergangsbereich zwischen der rotierenden Rolle und dem dazu unbeweglichen Abdeckelement ermöglicht werden. Dadurch kann eine Menge an sich bei einem Fahren des die Lenkrollenvorrichtung aufweisenden Gefährts, insbesondere des Rasenmähers, an der Lenkrollenvorrichtung absetzenden Fremdkörpern, beispielsweise Schmutz, Pflanzenreste o.dgl., vorteilhaft verringert werden. Es kann ein ungewolltes Blockieren der Rolle vorteilhaft verhindert werden.

Des Weiteren wird vorgeschlagen, dass die Außenfläche des Abdeckelements zumindest größtenteils, insbesondere zumindest im Wesentlichen vollständig, zumindest im Wesentlichen senkrecht zur Drehachse ausgerichtet ist. Es kann eine vorteilhaft kleine Fläche zum Absetzen von Fremdkörpern erreicht werden, welche sich insbesondere bei einer senkrecht zur Drehachse wirkenden Schwerkraft nicht oder nur in vorteilhaft geringen Mengen an einem senkrecht zur Drehachse ausgerichteten Bereich der Außenfläche des Abdeckelements absetzen können. Unter "im Wesentlichen senkrecht" soll insbesondere eine Ausrichtung einer Geraden, einer Ebene oder einer Richtung, insbesondere eine die Außenfläche des Abdeckelements umfassende Ebene, relativ zu einer anderen Geraden, einer anderen Ebene oder einer Bezugsrichtung, insbesondere einer die Drehachse umfassenden Geraden, verstanden werden, wobei die Gerade, die Ebene oder die Richtung und die andere Gerade, die andere Ebene oder die Bezugsrichtung, insbesondere in einer Projektionsebene betrachtet, einen Winkel von 90° mit einer maximalen Abweichung von insbesondere kleiner als 8°, vorteilhaft kleiner als 5° und besonders vorteilhaft kleiner als 2°, aufspannt. Unter "im Wesentlichen vollständig" soll insbesondere eine Angabe eines Anteils eines geometrischen Körpers oder eines anderen Objekts, insbesondere der Außenfläche des Abdeckelements, verstanden werden, wobei bezüglich einer Eigenschaft des anzugebenden Anteils, mindestens 90%, vorzugsweise mindestens 95% und bevorzugt mindestens 98%, des geometrischen Körpers oder des Objekts ausgewählt werden. Die Außenfläche des Abdeckelements ist vorzugsweise zumindest im Wesentlichen vollständig zumindest im Wesentlichen eben ausgebildet. Unter "im Wesentlichen eben" soll insbesondere eine Ausgestaltung einer Fläche, insbesondere der Außenfläche, verstanden werden, wobei alle Punkte innerhalb der Fläche zumindest im Wesentlichen auf, vorzugsweise in einem maximalen senkrecht zu einer Haupterstreckungsebene der Fläche ausgerichteten Abstand von höchstens 5%, vorzugsweise höchstens 3% und bevorzugt höchstens 1%, zu, einer Haupterstreckungsebene der Fläche liegen. Die Außenfläche erstreckt sich vorzugsweise zumindest im Wesentlichen vollständig entlang einer sich senkrecht zur Drehachse erstreckenden Ebene. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Zudem wird vorgeschlagen, dass sich die Außenfläche des Abdeckelements entlang der Drehachse und/oder der Mittelachse des Abdeckelements betrachtet über mindestens 50%, vorzugsweise mindestens 65% und bevorzugt mindestens 80%, einer maximalen Querschnittsfläche des Abdeckelements erstreckt. Es kann eine vorteilhaft kleine Fläche des Abdeckelements für ein ungewolltes Ablagern von Fremdkörpern erreicht werden. Insbesondere umfasst die maximale Querschnittsfläche des Abdeckelements nicht den über die Aussparung entnommenen Bereich des Abdeckelements. Es ist denkbar, dass sich die Außenfläche des Abdeckelements entlang der Drehachse und/oder der Mittelachse des Abdeckelements betrachtet mit Ausnahme der Wandung über die gesamte maximale Querschnittsfläche des Abdeckelements erstreckt.

Ferner wird vorgeschlagen, dass die Außenfläche des Abdeckelements entlang einer äußeren Kante des Abdeckelements an jeder Stelle um die Drehachse in einer gemeinsamen Ebene mit einer, insbesondere äußeren, Seitenfläche der Rolle angeordnet ist. Es kann ein Verkanten der Rolle durch sich zwischen der Rolle und dem Abdeckelement absetzenden Fremdkörpern vorteilhaft verhindert werden. Es kann ein vorteilhaft geringer Widerstand durch Fremdkörper beim Drehen der Rolle erreicht werden. Es kann ein Eindringen von Fremdkörpern in einen Zwischenraum zwischen Rolle und Abdeckelement vorteilhaft erschwert werden, insbesondere da entlang der äußeren Kante des Abdeckelements keine Fläche zum Reflektieren und/oder Hineinrutschen von Fremdkörpern angeordnet ist. Insbesondere begrenzt die äußere Kante des Abdeckelements den radialen Randbereich des Abdeckelements und/oder die Außenfläche des Abdeckelements. Insbesondere begrenzt die Seitenfläche der Rolle die Innenfläche der Rolle zumindest teilweise, vorzugsweise an einer entlang einer parallel zur Drehachse ausgerichteten Richtung ausgebildeten Seite der Innenfläche um die Drehachse betrachtet zumindest im Wesentlichen vollständig. Bevorzugt bildet die äußere Kante des Abdeckelements eine maximale radiale Erstreckung des Abdeckelements um die Mittelachse des Abdeckelements aus. Besonders bevorzugt weist die äußere Kante des Abdeckelements entlang der Mittelachse des Abdeckelements betrachtet eine kreisrunde Form auf. Vorzugsweise ist die gemeinsame Ebene der Außenfläche des Abdeckelements und der Seitenfläche der Rolle zumindest im Wesentlichen senkrecht zur Drehachse ausgerichtet. Bevorzugt ist die Außenfläche des Abdeckelements entlang der äußeren Kante des Abdeckelements bündig mit der, insbesondere äußeren, Seitenfläche der Rolle angeordnet. Insbesondere ist die Seitenfläche der Rolle zumindest im Wesentlichen senkrecht zur Drehachse ausgerichtet. Vorzugsweise ist die Außenfläche des Abdeckelements zumindest in einem Bereich der äußeren Kante des Abdeckelements, vorzugsweise zumindest im Wesentlichen vollständig, parallel zur Seitenfläche der Rolle ausgerichtet. Bevorzugt ist die Seitenfläche der Rolle senkrecht zur Drehachse betrachtet als äußerste Seitenfläche der Rolle ausgebildet. Insbesondere umfasst die Rolle an zwei voneinander abgewandten Seiten jeweils eine, insbesondere äußere, Seitenfläche, wobei Außenflächen der zwei Abdeckelemente jeweils entlang einer äußeren Kante des die jeweilige Außenfläche ausbildenden Abdeckelements an jeder Stelle um die Drehachse in einer gemeinsamen Ebene mit einer der, insbesondere äußeren, Seitenflächen der Rolle angeordnet sind. Vorzugsweise sind die Außenflächen der Abdeckelemente und die, insbesondere äußeren, Seitenflächen der Rolle relativ zu einer sich senkrecht zur Drehachse erstreckenden Haupterstreckungsebene der Rolle spiegelsymmetrisch ausgebildet.

Des Weiteren wird vorgeschlagen, dass die Rolle zumindest eine Ausnehmung begrenzt, wobei die Rolle dazu vorgesehen ist, das zumindest eine Abdeckelement über die Ausnehmung zumindest größtenteils, insbesondere zumindest im Wesentlichen vollständig, aufzunehmen. Es kann ein vorteilhaft kleiner Bereich des Abdeckelements erreicht werden, welcher senkrecht zur Drehachse betrachtet außerhalb der Rolle angeordnet ist. Dadurch kann eine vorteilhaft kleine Fläche des Abdeckelements für ein ungewolltes Ablagern von Fremdkörpern erreicht werden. Insbesondere ist das zumindest eine Abdeckelement beabstandet von der Rolle ausgebildet. Bevorzugt erstreckt sich die zumindest eine Ausnehmung an einer Stirnseite der Rolle um eine Mittelachse der Rolle bzw. um die Drehachse. Insbesondere umfasst die Drehachse die Mittelachse der Rolle in dem montierten Zustand. Bevorzugt ist die Rolle dazu vorgesehen, das zumindest eine Abdeckelement derart aufzunehmen, dass das Abdeckelement, insbesondere mit Ausnahme eines sich entlang der Drehachse über die Außenfläche hinaus erstreckenden Bereichs der Wandung des Abdeckelements, vollständig innerhalb der Ausnehmung angeordnet ist. In einer bevorzugten Ausgestaltung, insbesondere bei einer beidseitigen Halterung der Rolle über die Rollenhalteeinheit, begrenzt die Rolle zwei Ausnehmungen, die dazu vorgesehen sind, jeweils eines der zumindest zwei Abdeckelemente zumindest größtenteils, insbesondere zumindest im Wesentlichen vollständig, aufzunehmen. Bevorzugt begrenzt die Rolle zumindest eine weitere Ausnehmung zu einer Aufnahme der Lagereinheit. Insbesondere ist die zumindest eine weitere Ausnehmung zu einer zumindest im Wesentlichen vollständigen Aufnahme der Lagereinheit vorgesehen. Die zumindest eine weitere Ausnehmung erstreckt sich vorzugsweise um die Mittelachse der Rolle bzw. um die Drehachse, wobei insbesondere die Mittelachse der Rolle bzw. die Drehachse durch die weitere Ausnehmung verläuft. Vorzugsweise begrenzt die Rolle zumindest eine Durchführung zu einer Aufnahme des zumindest einen Rollenachsenelements. Insbesondere sind die zumindest eine Ausnehmung, insbesondere die zwei Ausnehmungen, die zumindest eine weitere Ausnehmung und/oder die zumindest eine Durchführung aneinander angeordnet und erstrecken sich zusammen parallel zur Mittelachse der Rolle bzw. zur Drehachse über eine vollständige Breite der Rolle.

Zudem wird vorgeschlagen, dass das Abdeckelement, insbesondere angrenzend an den radialen Randbereich des Abdeckelements, eine zumindest im Wesentlichen parallel zur Mittelachse des Abdeckelements ausgerichtete Seitenfläche aufweist, welche parallel zur Mittelachse des Abdeckelements eine maximale Erstreckung von mindestens 4 mm, vorzugsweise mindestens 5 mm und bevorzugt mindestens 6 mm, aufweist. Es kann ein Eindringen von Fremdkörpern in einen Zwischenraum zwischen Rolle und Abdeckelement vorteilhaft erschwert werden, insbesondere da ein längerer dünner Spalt zwischen Abdeckelement und Rolle ermöglicht werden kann. Durch einen solchen längeren Spalt kann eine vorteilhaft hohe Chance ermöglicht werden, dass Fremdkörper durch ein Zusammenwirken mit der Seitenfläche und/oder mit einer der Seitenfläche zugewandten Innenfläche der Rolle zerkleinert und/oder wieder aus dem Spalt heraus bewegt werden. Bevorzugt bildet die Seitenfläche des Abdeckelements entlang der Mittelachse des Abdeckelements betrachtet eine äußere Kontur des Abdeckelements aus. Vorzugsweise bildet das Abdeckelement entlang des radialen Randbereichs um die Mittelachse des Abdeckelements eine Seitenwandung aus, welche parallel zur Mittelachse die maximale Erstreckung von mindestens 4 mm, vorzugsweise mindestens 5 mm und bevorzugt mindestens 6 mm, aufweist. Vorzugsweise verläuft die zumindest eine Seitenfläche bzw. die zumindest eine Seitenwandung des Abdeckelements, bevorzugt über die gesamte maximale Erstreckung der Seitenfläche des Abdeckelements, zumindest im Wesentlichen parallel zu der Innenfläche der Rolle. Bevorzugt ist die zumindest eine Seitenfläche bzw. Seitenwandung des Abdeckelements, insbesondere in dem montierten Zustand, senkrecht zur Drehachse betrachtet zumindest im Wesentlichen vollständig innerhalb der/einer der Ausnehmung(en) der Rolle angeordnet.

Ferner wird vorgeschlagen, dass das Abdeckelement zumindest eine Ausnehmung begrenzt, welche an einer der Außenfläche abgewandten Seite des Abdeckelements angeordnet ist und sich beabstandet von der Mittelachse des Abdeckelements zumindest größtenteils, insbesondere zumindest im Wesentlichen vollständig, um die Mittelachse des Abdeckelements erstreckt. Es kann um die Drehachse ein vorteilhaft großer Innenraum zwischen Rolle und Abdeckelement ermöglicht werden, wodurch insbesondere Fremdkörper, welche zwischen der Rolle und dem Abdeckelement eindringen, gesammelt werden können, vorzugsweise ohne eine Drehbewegung der Rolle zu blockieren. Insbesondere ist die durch das Abdeckelement begrenzte Ausnehmung von der Seitenwandung und/oder der die Aussparung begrenzenden Wandung des Abdeckelements begrenzt. Insbesondere ist die durch das Abdeckelement begrenzte Ausnehmung in eine der Außenfläche abgewandte Richtung bzw. eine der Rolle zugewandte Richtung zumindest teilweise offen ausgebildet. Insbesondere umfasst das zumindest eine Abdeckelement eine Hauptseitenwandung, welche die Außenfläche des Abdeckelements ausbildet und an einer der Außenfläche abgewandten Seite die durch das Abdeckelement begrenzte Ausnehmung begrenzt. Insbesondere sind/ist die Seitenwandung und/oder die Wandung des Abdeckelements direkt an der Hauptseitenwandung angeordnet.

Des Weiteren wird vorgeschlagen, dass die Rolle zumindest zweiteilig ausgebildet ist, wobei Teilstücke der Rolle gegen eine zumindest im Wesentlichen parallel zur Drehachse ausgerichtete Relativbewegung über eine Rastverbindung und/oder eine Schraubverbindung aneinander fixierbar sind. Es kann eine vorteilhaft einfache und schnelle Montage der Lenkrollenvorrichtung ermöglicht werden. Es kann ein vollständiges Umschließen von Bauteilen, beispielsweise der Lagereinheit, durch die Rolle vorteilhaft ermöglicht werden. Bevorzugt bildet die Rolle, insbesondere die Teilstücke der Rolle, eine Abrollfläche aus, die vorzugsweise dazu vorgesehen ist, zu einer Fortbewegung des Geräts, insbesondere des Rasenmähers, mit einem Untergrund zusammen zu wirken. Insbesondere erstreckt sich die Abrollfläche zumindest im Wesentlichen vollständig um die Mittelachse der Rolle bzw. die Drehachse. Bevorzugt ist die Rolle aus zumindest zwei, insbesondere genau zwei, Teilstücken gebildet. Bevorzugt bilden die Teilstücke der Rolle jeweils die Abrollfläche zumindest teilweise aus. Besonders bevorzugt bilden die zwei Teilstücke der Rolle jeweils eine Hälfte der Abrollfläche aus. Bevorzugt erstreckt sich eine Berührungskante der zwei Teilstücke der Rolle auf der Abrollfläche zumindest im Wesentlichen vollständig innerhalb der parallel zur Drehachse bzw. zur Mittelachse der Rolle ausgerichteten Haupterstreckungsebene der Rolle. Vorzugsweise ist die Rastverbindung und/oder die Schraubverbindung innerhalb der Rolle angeordnet. In einer bevorzugten Ausgestaltung sind die Teilstücke über eine Rastverbindung aneinander fixierbar, wobei ein Teilstück der Rolle zumindest ein, vorzugsweise mehrere, Rastelement(e) ausbildet und ein anderes Teilstück der Rolle zumindest ein, vorzugsweise mehrere, Gegenrastelement(e) ausbildet. Insbesondere sind das/die Rastelemente und das/die Gegenrastelemente dazu vorgesehen, zur Fixierung der Teilstücke der Rolle gegen eine zumindest im Wesentlichen parallel zur Drehachse ausgerichtete Relativbewegung ineinander zu greifen, wobei vorzugsweise die Teilstücke zumindest formschlüssig miteinander verbunden werden. Bevorzugt sind die Teilstücke der Rolle, insbesondere das/die Rastelement(e) und das/die Gegenrastelement(e), derart ausgebildet, dass die Teilstücke über eine Bewegung entlang der Mittelachse der Rolle, insbesondere entlang der koaxial zueinander ausgerichteten Mittelachsen der Teilstücke der Rolle, miteinander verbindbar sind.

Zudem wird vorgeschlagen, dass die Rolle zumindest zweiteilig ausgebildet ist, wobei Teilstücke der Rolle gegen eine Relativbewegung um die Drehachse über einen Formschluss, insbesondere über zumindest zwei Formschlussfortsätze, aneinander fixierbar sind. Es kann eine vorteilhaft einfache und kostengünstige Ausgestaltung der Rolle, insbesondere der Teilstücke, erreicht werden. Bevorzugt bildet zumindest eines der Teilstücke der Rolle einen oder mehrere Formschlussfortsätze aus. Der/die Formschlussfortsatz/Formschlussfortsätze ist/sind dazu vorgesehen, gegen eine Bewegung der Teilstücke relativ zueinander um die Drehachse und/oder um die Mittelachse der Rolle formschlüssig an zumindest einer Innenwand eines der Teilstücke der Rolle anzugreifen. Bevorzugt bilden die zwei Teilstücke der Rolle jeweils zumindest einen Formschlussfortsatz, insbesondere eine Mehrzahl von Formschlussfortsätze, aus. Alternativ oder zusätzlich ist denkbar, dass die Rastelemente als Formschlussfortsätze ausgebildet sind, wobei vorzugsweise die Rastelemente zusätzlich zu einem Zusammenwirken mit einem Gegenrastelement dazu vorgesehen sind, bei einer Bewegung des das Rastelement ausbildenden Teilstücks der Rolle in zumindest eine Umlaufrichtung um die Mittelachse der Rolle bzw. um die Drehachse mit einer Innenwand eines anderen Teilstücks der Rolle zusammenzuwirken, wobei vorzugsweise das Teilstück und das andere Teilstück der Rolle gegen eine Relativbewegung um die Drehachse aneinander fixiert sind. Bevorzugt bilden die zwei Teilstücke der Rolle jeweils zumindest eine Anliegefläche aus. Vorzugsweise sind die zwei Teilstücke der Rolle dazu vorgesehen, in einem montierten Zustand der Rolle, wobei insbesondere die zwei Teilstücke aneinander befestigt sind, über die Anliegefläche in eine zumindest im Wesentlichen parallel zur Drehachse bzw. zur Mittelachse der Rolle ausgerichtete Richtung aneinander anzuliegen. Bevorzugt liegen die zwei Teilstücke der Rolle in einem Bereich der Abrollfläche und/oder einem Bereich von die Abrollfläche ausbildenden Außenwandungen der Teilstücke über die Anliegefläche aneinander an. Bevorzugt erstreckt sich die Anliegefläche zumindest größtenteils innerhalb der senkrecht zur Drehachse ausgerichteten Haupterstreckungsebene der Rolle. Bevorzugt erstrecken/erstreckt sich das/die Rastelement(e) und/oder der/die Formschlussfortsatz/Formschlussfortsätze senkrecht zur Mittelachse der Rolle bzw. zur Drehachse betrachtet um mindestens 0,2 cm, vorzugsweise mindestens 0,4 cm und bevorzugt um mindestens 0,5 cm, über die Anliegefläche und/oder die senkrecht zur Drehachse ausgerichtete Haupterstreckungsebene der Rolle hinaus.

Ferner wird vorgeschlagen, dass die Rolle die Lagereinheit, insbesondere in einem montierten Zustand der Rolle, zumindest größtenteils, insbesondere zumindest im Wesentlichen vollständig, umschließt. Es kann ein ungewolltes Eindringen von Fremdkörpern in die Lagereinheit vorteilhaft verhindert werden. Es kann eine vorteilhaft sichere und stabile Fixierung der Lagereinheit an der Rolle und einem Rollenachsenelement der Rollenhalteeinheit ermöglicht werden. Bevorzugt erstreckt sich die zumindest eine weitere Ausnehmung um die Durchführung der Rolle herum von der Mittelachse der Rolle bzw. von der Drehachse aus in eine radiale Richtung. Bevorzugterweise bildet die Rolle, insbesondere die Teilstücke der Rolle jeweils, zumindest eine Aufnahmewand aus, welche die zumindest eine weitere Ausnehmung begrenzt. Bevorzugt ist die Aufnahmewand dazu vorgesehen, die Lagereinheit, insbesondere ein Kugellager der Lagereinheit, über einen Formschluss gegen eine Bewegung in eine zumindest im Wesentlichen parallel zur Mittelachse der Rolle bzw. zur Drehachse ausgerichtete Richtung an der Rolle, insbesondere dem Teilstück der Rolle, zu fixieren. Insbesondere bildet das zumindest eine Rollenachsenelement zumindest einen Fortsatz aus, welcher zu einer formschlüssigen Verbindung mit der Lagereinheit, insbesondere einem Kugellager der Lagereinheit, vorgesehen ist. Bevorzugt ist die Lagereinheit, insbesondere das/die Kugellager der Lagereinheit, in dem montierten Zustand der Lenkrollenvorrichtung über die zumindest eine Aufnahmewand und den zumindest einen Fortsatz des Rollenachsenelements fixiert. Insbesondere ist die zumindest eine Aufnahmewand der Rolle, insbesondere eines Teilstücks der Rolle, zumindest teilweise zwischen der Ausnehmung und der weiteren Ausnehmung angeordnet. Bevorzugt ist die zumindest eine Aufnahmewand der Rolle, insbesondere eines Teilstücks der Rolle, dazu vorgesehen, die Ausnehmung und die weitere Ausnehmung, insbesondere mit Ausnahme der Durchführung, voneinander zu trennen.

Des Weiteren wird vorgeschlagen, dass die Rollenhalteeinheit zumindest ein Rollenachsenelement umfasst, wobei die Rolle über die Lagereinheit um das Rollenachsenelement beweglich gelagert ist, wobei das zumindest eine Abdeckelement gegen eine Bewegung um die Drehachse über einen Formschluss drehfest an dem zumindest einen Rollenachsenelement fixiert ist. Es kann eine vorteilhaft einfache und schnelle Montage der Lenkrollenvorrichtung ermöglicht werden, insbesondere da die Rolle leichter von dem Rollenachsenelement getrennt werden kann. Es kann ein vorteilhaft einfaches und kostengünstiges Austauschen des Abdeckelements ermöglicht werden. Bevorzugt entspricht entlang der Mittelachse des Abdeckelements und/oder der Drehachse betrachtet eine Kontur der Aussparung und/oder eine Kontur einer Innenfläche der Wandung des zumindest einen Abdeckelements einer Kontur einer Außenfläche des zumindest einen Rollenachsenelements entlang der Drehachse und/oder der Haupterstreckungsachse des Rollenachsenelements betrachtet. Vorzugsweise ist das zumindest eine Abdeckelement dazu vorgesehen, über die Innenfläche der Wandung des zumindest einen Abdeckelements auf das zumindest eine Rollenachsenelement aufgesteckt zu werden. Besonders bevorzugt ist die Kontur der Außenfläche des zumindest einen Rollenachsenelements und/oder die Kontur der Aussparung und/oder die Kontur der Innenfläche der Wandung des zumindest einen Abdeckelements verschieden von einer runden, insbesondere kreisförmigen, Form ausgebildet, vorzugsweise eckig. Es ist denkbar, dass das zumindest eine Abdeckelement gegen eine Bewegung entlang der Mittelachse des Abdeckelements relativ zu dem Rollenachsenelement über eine Rastverbindung, eine Steckverbindung o.dgl. zumindest kraftschlüssig und/oder formschlüssig an dem Rollenachsenelement fixiert, insbesondere befestigt, ist. Alternativ oder zusätzlich ist denkbar, dass das zumindest eine Abdeckelement über einen Formschluss mit der Rollenhalteeinheit, insbesondere der Aufhängung, gegen eine Bewegung entlang der Mittelachse des Abdeckelements relativ zu dem Rollenachsenelement an dem Rollenachsenelement fixiert ist.

Zudem wird vorgeschlagen, dass die Rollenhalteeinheit zumindest ein Rollenachsenelement umfasst, wobei die Rolle über die Lagereinheit um das Rollenachsenelement beweglich gelagert ist, wobei das zumindest eine Abdeckelement einteilig mit dem zumindest einen Rollenachsenelement ausgebildet ist. Es kann eine vorteilhaft geringe Anzahl an verschiedenen Bauteilen der Lenkrollenvorrichtung ermöglicht werden. Dadurch können vorteilhaft geringe Herstellungskosten erreicht werden. Es kann eine vorteilhaft robuste Lenkrollenvorrichtung erreicht werden. Es kann eine Anzahl an Zwischenräumen von verschiedenen Bauteilen, in die Fremdkörper bis zur Rolle und/oder der Lagereinheit gelangen können, vorteilhaft reduziert werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere ist die, insbesondere die Aussparung begrenzende, Wandung des Abdeckelements als Teil des Rollenachsenelements ausgebildet. Vorzugsweise umfasst die Rollenhalteeinheit zumindest zwei, insbesondere genau zwei, Rollenachsenelemente, die gegenüber einer Bewegung relativ zueinander um die Drehachse form- und/oder kraftschlüssig aneinander fixierbar sind. Beispielsweise sind die zwei Rollenachsenelemente dazu vorgesehen, in dem montierten Zustand, insbesondere bei einer Anordnung innerhalb der Durchführung der Rolle, ineinander einzugreifen bzw. aneinander fixiert oder befestigt zu werden. Insbesondere ist jeweils zumindest ein Abdeckelement der Antiblockiereinheit einteilig mit einem Rollenachsenelement der Rollenhalteeinheit ausgebildet. Bevorzugt ist jeweils eines der zwei Abdeckelemente einteilig mit einem der zwei Rollenachsenelemente ausgebildet.

Ferner wird vorgeschlagen, dass die Antiblockiereinheit zumindest ein Abschirmelement umfasst, welches zwischen der Rolle und dem zumindest einen Abdeckelement angeordnet ist und drehfest an der Rolle fixiert ist, wobei das Abschirmelement dazu vorgesehen ist, ein Eindringen von Fremdkörpern, insbesondere Schmutz, in einen von der Rolle begrenzten Zwischenraum zu verhindern. Es kann ein Eindringen von Fremdkörpern in den Zwischenraum der Rolle vorteilhaft verhindert werden. Es kann einer Verschmutzung der Lagereinheit vorteilhaft entgegengewirkt werden. Es kann ein Blockieren der Rolle zur Bewegung um die Drehachse vorteilhaft verhindert werden. Es kann vorteilhaft eine Umlenkung von Fremdkörpern in die von dem Abdeckelement begrenzte Ausnehmung erreicht werden. Das zumindest eine Abschirmelement ist vorzugsweise dazu vorgesehen, eine von der Rolle, insbesondere von einem Teilstück der Rolle, begrenzte Öffnung, insbesondere entlang zumindest einer parallel zur Drehachse ausgerichteten Richtung betrachtet, zumindest im Wesentlichen vollständig zu verdecken. Vorzugsweise ist das zumindest eine Abschirmelement in dem montierten Zustand an einer von der Außenfläche des Abdeckelements abgewandten Seite des Abdeckelements an der Rolle angeordnet. Bevorzugt ist das zumindest eine Abschirmelement an einer dem/einem Abdeckelement zugewandten Seite der Rolle angeordnet. Es ist denkbar, dass die Antiblockiereinheit zwei Abschirmelemente umfasst, die an zwei voneinander abgewandten Seiten der Rolle angeordnet sind. Bevorzugt begrenzt das zumindest eine Abschirmelement zumindest eine Aussparung, welche insbesondere zu einer Durchführung des/eines der Rollenachsenelemente vorgesehen ist. Insbesondere erstreckt sich die Aussparung des Abschirmelements jeweils um eine Mittelachse des Abschirmelements und/oder in dem montierten Zustand um die Drehachse. Bevorzugterweise ist das zumindest eine Abschirmelement, insbesondere entlang der Drehachse und/oder der Mittelachse des Abschirmelements betrachtet, kreisringförmig ausgebildet. Bevorzugt liegt das zumindest eine Abschirmelement an der Rolle, insbesondere einem Teilstück der Rolle, an. Insbesondere ist das zumindest eine Abschirmelement an der Rolle, insbesondere einem Teilstück der Rolle, fixiert. Insbesondere ist das zumindest eine Abschirmelement dazu vorgesehen, sich bei einer Bewegung der Rolle um die Drehachse zusammen mit der Rolle um die Drehachse zu bewegen. Bevorzugt bildet die Rolle, insbesondere das Teilstück der Rolle, an dem das Abschirmelement angeordnet ist, zumindest einen Fortsatz, insbesondere eine Mehrzahl von Fortsätzen, aus, der dazu vorgesehen ist, das zumindest eine Abschirmelement bei einer Bewegung um die Drehachse formschlüssig an der Rolle, insbesondere dem Teilstück zu halten, wobei insbesondere das Abschirmelement über den/die Fortsätze um die Drehachse mitbewegt wird. Bevorzugt begrenzt das zumindest eine Abschirmelement zumindest eine Aufnahmeausnehmung, insbesondere eine Mehrzahl von Aufnahmeausnehmungen, zu einer Aufnahme des Fortsatzes/der Fortsätze der Rolle, insbesondere des Teilstücks der Rolle. Bevorzugt ist das Abschirmelement dazu vorgesehen, bei einer Anordnung an der Rolle, insbesondere dem Teilstück, über die Aufnahmeausnehmung(en) und den Fortsatz/die Fortsätze auf die Rolle, insbesondere das Teilstück der Rolle, aufgesteckt zu werden. Es ist denkbar, dass das zumindest eine Abschirmelement dazu vorgesehen ist, über eine Rastverbindung o.dgl. an der Rolle, insbesondere dem Teilstück der Rolle, befestigt zu werden. Alternativ ist denkbar, dass das zumindest eine Abdeckelement dazu vorgesehen ist, das zumindest eine Abschirmelement bei einer Anordnung an der Rolle, insbesondere dem Teilstück der Rolle, vorzugsweise über die Ausnehmung der Rolle, an der Rolle, insbesondere dem Teilstück der Rolle, zu halten und/oder zu fixieren. Insbesondere ist ein Abnehmen des zumindest einen Abschirmelements durch das zumindest eine Abdeckelement blockiert.

Außerdem wird ein Rasenmäher, insbesondere ein teilautonomer oder ein vollautonomer Rasenmähroboter, mit zumindest einer erfindungsgemäßen Lenkrollenvorrichtung vorgeschlagen. Vorzugsweise weist der Rasenmäher zumindest eine Antriebseinheit auf, welche insbesondere zumindest einen Motor, vorzugsweise einen Elektromotor, umfasst. Bevorzugt umfasst der Rasenmäher zumindest ein Antriebsrad, wobei vorzugsweise die Antriebseinheit dazu vorgesehen ist, das zumindest eine Antriebsrad in einer Bewegung um eine Antriebsachse anzutreiben. Bevorzugt ist die zumindest eine Lenkrollenvorrichtung beabstandet von der Antriebseinheit und/oder dem Antriebsrad angeordnet. Alternativ ist denkbar, dass die Lenkrollenvorrichtung zumindest teilweise, insbesondere in einer Bewegung um die Lenkachse, über die Antriebseinheit antreibbar ausgebildet ist. Bevorzugt umfasst der Rasenmäher zumindest eine Lageraufnahme, welche zu einer Lagerung der Lenkrollenvorrichtung um die Lenkachse am Rasenmäher vorgesehen ist. Vorzugsweise ist die Lageraufnahme zu einer zumindest teilweisen Aufnahme des Lagerbolzens der Lenkrollenlagereinheit vorgesehen.

Durch die erfindungsgemäße Ausgestaltung des Rasenmähers kann einem Ablagern von Pflanzenrückständen, welche sich bei einer Bewegung des Rasenmähers über die Lenkrollenvorrichtung, zwischen der beweglichen Rolle und einem unbeweglichen Teil der Lenkrollenvorrichtung absetzen können, vorteilhaft entgegengewirkt werden. Es kann ein ungewolltes Blockieren der Rolle vorteilhaft verhindert werden. Es kann ein vorteilhaft kontinuierlicher und fehlerfreier Betrieb des Rasenmähers gewährleistet werden.

Zudem wird ein Verfahren zur Montage einer erfindungsgemäßen Lenkrollenvorrichtung vorgeschlagen.

Durch die erfindungsgemäße Ausgestaltung des Verfahrens kann ein vorteilhaft intuitives und schnelles Montieren der Lenkrollenvorrichtung erreicht werden. Es kann eine vorteilhaft blockiersichere Lenkrollenvorrichtung ermöglicht werden, insbesondere da die einzelnen Bauteile der Lenkrollenvorrichtung, insbesondere die Lagereinheit und ein Zwischenraum der Rolle, möglichst vollständig umbaut werden können.

Die erfindungsgemäße Lenkrollenvorrichtung, der erfindungsgemäße Rasenmäher und/oder das erfindungsgemäße Verfahren sollen/soll hierbei nicht auf die oben beschriebene Anwendung und Ausführungsform beschränkt sein. Insbesondere können/kann die erfindungsgemäße Lenkrollenvorrichtung, der erfindungsgemäße Rasenmäher und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

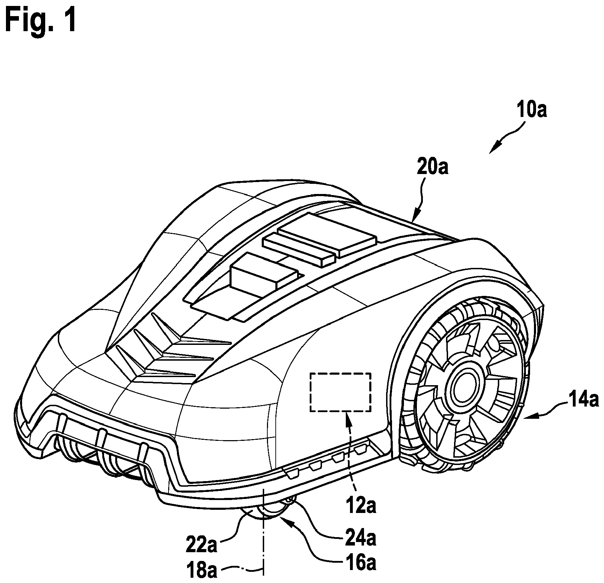

Es zeigen:
- .Fig. 1: eine schematische Darstellung eines erfindungsgemäßen Rasenmähers, welcher als ein teilautonomer Mähroboter ausgebildet ist, mit zwei erfindungsgemäßen Lenkrollenvorrichtungen,
- Fig. 2: eine schematische Darstellung einer der erfindungsgemäßen Lenkrollenvorrichtungen des erfindungsgemäßen Rasenmähers in einer geschnittenen Ansicht,
- Fig. 3: eine schematische Darstellung einer Rolle der erfindungsgemäßen Lenkrollenvorrichtung und eines Abdeckelements einer Antiblockiereinheit der Lenkrollenvorrichtung in einer perspektivischen Seitenansicht,
- Fig. 4: eine schematische Darstellung der Rolle der erfindungsgemäßen Lenkrollenvorrichtung und eines Abschirmelements der Antiblockiereinheit der Lenkrollenvorrichtung in einer perspektivischen Seitenansicht,
- Fig. 5: eine schematische Darstellung der Rolle der erfindungsgemäßen Lenkrollenvorrichtung in einer perspektivischen Seitenansicht,
- Fig. 6: eine schematische Darstellung eines Teilstücks der Rolle der erfindungsgemäßen Lenkrollenvorrichtung mit einem in dem Teilstück aufgenommenen Kugellager einer Lagereinheit der Lenkrollenvorrichtung und mit einem Rollenachsenhalteelement einer Rollenhalteeinheit der Lenkrollenvorrichtung in einer perspektivischen Ansicht,
- Fig. 7: eine schematische Darstellung eines beispielhaften Ablaufs eines Verfahrens zur Montage der erfindungsgemäßen Lenkrollenvorrichtung,
- Fig. 8: eine schematische Darstellung einer alternativen Ausgestaltung einer erfindungsgemäßen Lenkrollenvorrichtung in einer geschnittenen Ansicht,
- Fig. 9: eine schematische Explosionsskizze der alternativen Ausgestaltung der erfindungsgemäßen Lenkrollenvorrichtung und
- Fig. 10: eine schematische Darstellung einer weiteren alternativen Ausgestaltung einer erfindungsgemäßen Lenkrollenvorrichtung in einer geschnittenen Ansicht im Bereich einer Rolle der Lenkrollenvorrichtung.

### Beschreibung der Ausführungsbeispiele

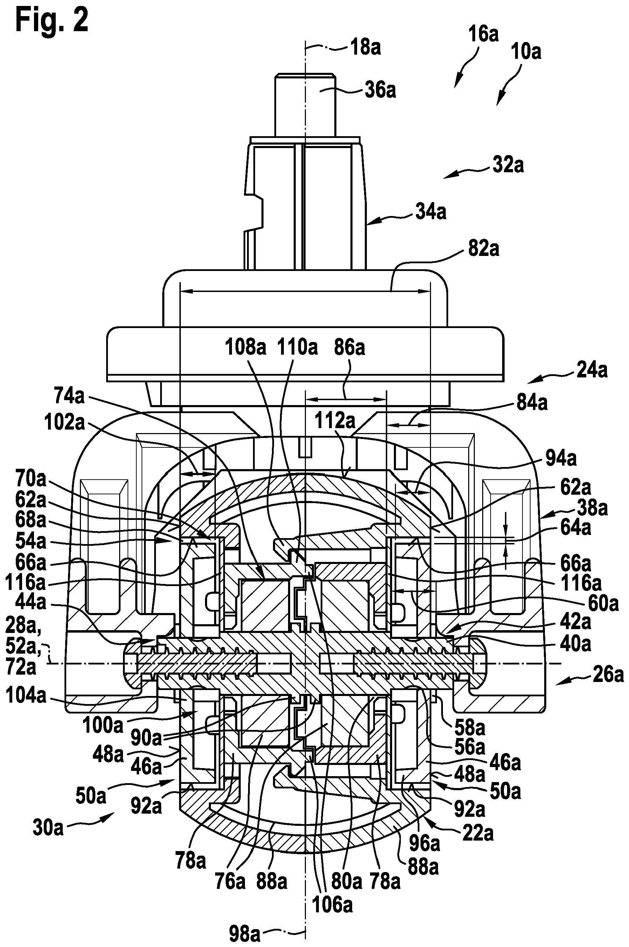

In Figur 1 ist ein als teilautonomer Mähroboter ausgebildeter Rasenmäher 10a gezeigt. Es ist auch denkbar, dass der Rasenmäher 10a als vollautonomer Mähroboter oder als ein anderer, insbesondere als ein zu bedienender, Rasenmäher ausgebildet ist. Der Rasenmäher 10a umfasst eine Antriebseinheit 12a, zwei über die Antriebseinheit 12a antreibbare Antriebsräder 14a und zwei Lenkrollenvorrichtungen 16a, wobei insbesondere in Figur 1 lediglich eine der Lenkrollenvorrichtungen 16a sichtbar ist. Die Antriebseinheit 12a umfasst einen Elektromotor und zumindest einen Energiespeicher (In Figur 1 nicht gezeigt). Die Lenkrollenvorrichtungen 16a sind jeweils um eine Lenkachse 18a drehbar an einem Gehäuse 20a des Rasenmähers 10a gelagert. Es ist auch denkbar, dass die Lenkrollenvorrichtungen 16a an einem Rahmen und/oder einer Grundplatte des Rasenmähers 10a gelagert sind. Bevorzugt sind die Lenkrollenvorrichtungen 16a und die Antriebsräder 14a an einem Unterboden des Rasenmähers 10a angeordnet. Die Lenkrollenvorrichtungen 16a sind zumindest im Wesentlichen baugleich ausgebildet, wobei insbesondere im Folgenden Merkmale der zwei Lenkrollenvorrichtungen 16a jeweils anhand einer der zwei Lenkrollenvorrichtungen 16a beschrieben werden. Die Lenkrollenvorrichtung 16a umfasst jeweils eine Rolle 22a, eine Rollenhalteeinheit 24a, welche die Rolle 22a zumindest teilweise umgreift, eine Lagereinheit 26a (siehe Figur 2) zu einer beweglichen Lagerung der Rolle 22a an der Rollenhalteeinheit 24a um eine Drehachse 28a (siehe Figur 2), und eine Antiblockiereinheit 30a (siehe Figur 2), die dazu vorgesehen ist, einer unerwünschten Blockierung der Rolle 22a durch Fremdkörper, insbesondere infolge einer Verschmutzung, entgegenzuwirken.

In Figur 2 ist eine schematische Darstellung der Lenkrollenvorrichtung 16a gezeigt, wobei insbesondere ein Teil der Rollenhalteeinheit 24a, die Antiblockiereinheit 30a und die Rolle 22a geschnitten dargestellt sind. Die Lenkrollenvorrichtung 16a umfasst eine Lenkrollenlagereinheit 32a. Die Lenkrollenlagereinheit 32a ist dazu vorgesehen, zumindest die Rolle 22a, die Antiblockiereinheit 30a und die Rollenhalteeinheit 24a um eine Lenkachse 18a drehbar an dem Rasenmäher 10a zu lagern. Die Lenkrollenlagereinheit 32a umfasst zumindest eine Lageraufnahme 34a, welche als Teil des Rasenmähers 10a an dem Gehäuse 20a befestigt ist. Die Lenkrollenlagereinheit 32a umfasst einen Lagerbolzen 36a, welcher an der Rollenhalteeinheit 24a befestigt ist. Bevorzugt erstreckt sich eine Haupterstreckungsachse des Lagerbolzens 36a quer, bevorzugt zumindest im Wesentlichen senkrecht, zur Drehachse 28a der Lenkrollenvorrichtung 16a. Die Lenkrollenvorrichtung 16a ist über den Lagerbolzen 36a, welcher in der Lageraufnahme 34a angeordnet ist, drehbar an dem Rasenmäher 10a gelagert und gegen eine Bewegung entlang der Lenkachse 18a an dem Rasenmäher 10a fixiert.

Die Rollenhalteeinheit 24a umfasst eine Aufhängung 38a und ein Rollenachsenelement 40a. Die Rolle 22a ist über die Lagereinheit 26a um die Drehachse 28a drehbar an dem Rollenachsenelement 40a angeordnet. Das Rollenachsenelement 40a ist zumindest im Wesentlichen stabförmig bzw. stiftförmig ausgebildet. Bevorzugt ist das Rollenachsenelement 40a hohl ausgebildet. Die Aufhängung 38a umgreift die Rolle 22a über einen Winkelbereich von mindestens 180°, bevorzugt von einem Ende 42a des Rollenachsenelements 40a zu einem anderen Ende 44a des Rollenachsenelements 40a. Das Rollenachsenelement 40a ist an den beiden Enden 42a, 44a des Rollenachsenelements 40a jeweils über eine Schraube an der Aufhängung 38a befestigt. Besonders bevorzugt ist das Rollenachsenelement 40a drehfest an der Aufhängung 38a angeordnet.

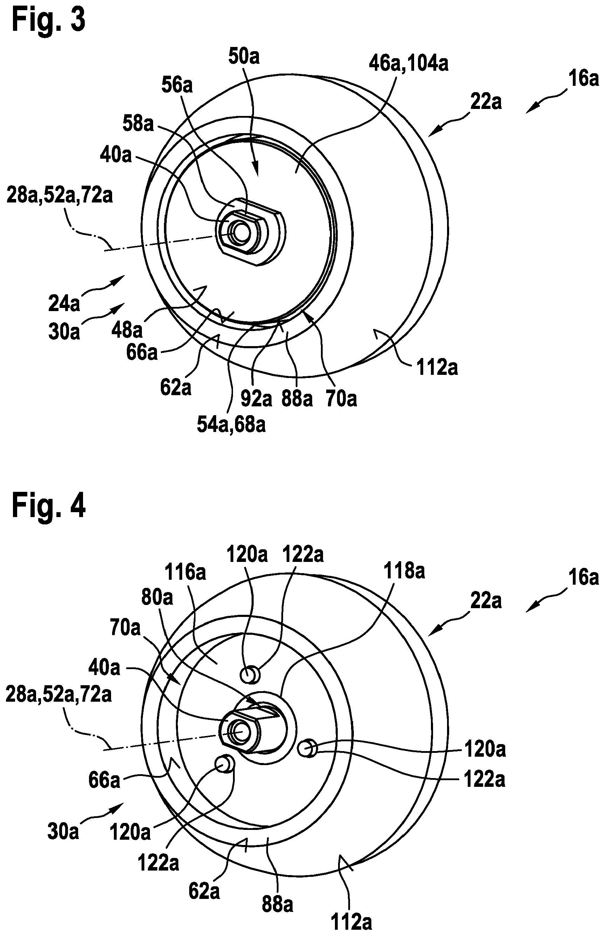

Die Antiblockiereinheit 30a umfasst zwei Abdeckelemente 46a, die jeweils dazu vorgesehen sind, die Rolle 22a und die Lagereinheit 26a entlang zumindest einer zumindest im Wesentlichen parallel zur Drehachse 28a ausgerichteten Richtung jeweils zumindest teilweise zu verdecken. Die Abdeckelemente 46a sind relativ zur Rollenhalteeinheit 24a um die Drehachse 28a zumindest im Wesentlichen unbeweglich ausgebildet. Die Abdeckelemente 46a weisen jeweils eine Außenfläche 48a auf, die in einem radialen Randbereich 50a des jeweiligen Abdeckelements 46a (vgl. auch Figur 3), welcher sich zumindest im Wesentlichen vollständig um eine Mittelachse 52a des jeweiligen Abdeckelements 46a erstreckt, um die Mittelachse 52a des jeweiligen Abdeckelements 46a rotationssymmetrisch ausgebildet ist. Die Außenflächen 48a der Abdeckelemente 46a sind jeweils zumindest im Wesentlichen eben ausgebildet. Die Außenflächen 48a der Abdeckelemente 46a sind jeweils zumindest im Wesentlichen vollständig zumindest im Wesentlichen senkrecht zur Drehachse 28a ausgerichtet. Die zwei Abdeckelemente 46a sind zumindest im Wesentlichen baugleich ausgebildet, wobei eines der Abdeckelemente 46a um 180° versetzt zu einem anderen der Abdeckelemente 46a an der Rolle 22a angeordnet ist. Im Folgenden werden die Merkmale der Abdeckelemente 46a jeweils an einem der Abdeckelemente 46a beschrieben, wobei die Merkmale bevorzugt für die zwei Abdeckelemente 46a der Antiblockiereinheit 30a der Lenkrollenvorrichtung 16a zu lesen sind. Die Drehachse 28a und die Mittelachse 52a des Abdeckelements 46a sind beabstandet von der Außenfläche 48a des Abdeckelements 46a angeordnet und schneiden diese insbesondere nicht. Eine Kontur 54a des Abdeckelements 46a im Bereich der Außenfläche 48a ist innerhalb einer die Mittelachse 52a des Abdeckelements 46a umfassenden Schnittebene des Abdeckelements 46a betrachtet (vgl. Figur 2) an jeder Position um die Mittelachse 52a des Abdeckelements 46a zumindest im Wesentlichen identisch ausgebildet. Die Kontur 54a des Abdeckelements 46a im Bereich der Außenfläche 48a ist in der Schnittebene betrachtet zumindest im Wesentlichen geradlinig ausgebildet und weist zur Mittelachse 52a des Abdeckelements 46a einen Winkel von zumindest im Wesentlichen 90° auf.

Die Abdeckelemente 46a begrenzen jeweils in einem Nahbereich der Mittelachse 52a des jeweiligen Abdeckelements 46a um die Mittelachse 52a des jeweiligen Abdeckelements 46a herum eine Aussparung 56a. Vorzugsweise verläuft die Drehachse 28a in einem montierten Zustand der Abdeckelemente 46a durch die Aussparungen 56a und schneidet die Abdeckelemente 46a vorzugsweise nicht. Die Abdeckelemente 46a bilden jeweils eine Wandung 58a aus, welche sich um die Mittelachse 52a des jeweiligen Abdeckelements 46a erstreckt und die Aussparung 56a des jeweiligen Abdeckelements 46a begrenzt. Die Wandungen 58a erstrecken sich jeweils über eine maximale Erstreckung 60a des die jeweilige Wandung 58a ausbildenden Abdeckelements 46a, welche zumindest im Wesentlichen parallel zur Mittelachse 52a des Abdeckelements 46a ausgerichtet ist. Bevorzugt ist eine Innenfläche der Wandungen 58a, welche die Aussparung 56a begrenzt, in einer die Mittelachse 52a des Abdeckelements 46a umfassenden Schnittebene betrachtet zumindest im Wesentlichen parallel zur Mittelachse 52a des Abdeckelements 46a ausgerichtet. Die Wandungen 58a begrenzen jeweils an einer von der Mittelachse 52a des die jeweilige Wandung 58a ausbildenden Abdeckelements 46a abgewandten Seite die Außenflächen 48a des die jeweilige Wandung 58a ausbildenden Abdeckelements 46a.

Die Außenflächen 48a der Abdeckelemente 46a sind jeweils an einer der Rolle 22a abgewandten Seite der Abdeckelemente 46a angeordnet. Die Abdeckelemente 46a weisen jeweils zu einer senkrecht zur Drehachse 28a betrachtet äußersten Seitenfläche 62a der Rolle 22a entlang der Drehachse 28a betrachtet, insbesondere in einer sich senkrecht zur Drehachse 28a erstreckenden Schnittebene durch das jeweilige Abdeckelement 46a und die Rolle 22a betrachtet, radial zur Drehachse 28a einen minimalen Abstand 64a von höchstens 1,5 mm, vorzugsweise höchstens 1,25 mm und bevorzugt höchstens 1 mm, auf. Die Rolle 22a bildet zwei Innenflächen 66a aus, welche jeweils zumindest im Wesentlichen parallel zur Drehachse 28a ausgerichtet sind und an einer einem der Abdeckelemente 46a zugewandten Innenseite der Rolle 22a angeordnet sind. Insbesondere begrenzen die äußersten Seitenflächen 62a der Rolle 22a jeweils eine der Innenflächen 66a der Rolle 22a um die Drehachse 28a. Ein radial zur Drehachse 28a ausgerichteter minimaler Abstand 64a zwischen der Innenfläche der Rolle 22a und dem Abdeckelement 46a, insbesondere einer äußeren Kante 68a des Abdeckelements 46a, beträgt entlang der Drehachse 28a betrachtet höchstens 1,5 mm, vorzugsweise höchstens 1,25 mm und bevorzugt höchstens 1 mm. Vorzugsweise sind die Abdeckelemente 46a gegenüber einer Bewegung um die Drehachse 28a an der Rollenhalteeinheit 24a fixiert.

Alternativ sind auch andere Ausgestaltungen der Lenkrollenvorrichtung 16a, insbesondere des Abdeckelements 46a, denkbar. Beispielsweise sind Ausgestaltungen des Abdeckelements 46a denkbar, wobei die Kontur 54a des radialen Randbereichs 50a des Abdeckelements 46a/der Abdeckelemente 46a gebogen ausgebildet ist und/oder schräg zu einer sich senkrecht zur Drehachse 28a erstreckenden Ebene ausgerichtet ist. Alternativ oder zusätzlich ist denkbar, dass die Rollenhalteeinheit 24a, insbesondere die Aufhängung 38a, die Rolle 22a lediglich an einer Seite umgreift, wobei insbesondere das Rollenachsenelement 40a lediglich an einer Seite der Rolle 22a gehalten wird. In einer solchen Ausgestaltung umfasst die Antiblockiereinheit 30a lediglich ein Abdeckelement 46a. Es ist denkbar, dass die Antiblockiereinheit 30a ein weiteres Abdeckelement umfasst, welches insbesondere keine Aussparung begrenzt und die frei von der Aufhängung 38a ausgebildete Seite der Rolle 22a zumindest im Wesentlichen größtenteils verdeckt.

Die Außenflächen 48a der Abdeckelemente 46a sind jeweils entlang einer äußeren Kante des die jeweilige Außenfläche 48a aufweisenden Abdeckelements 46a an jeder Stelle um die Drehachse 28a in einer gemeinsamen Ebene mit einer, insbesondere äußeren, Seitenfläche der Rolle 22a angeordnet. Die Seitenflächen 62a der Rolle 22a begrenzen jeweils eine Innenfläche 66a der Rolle 22a zumindest teilweise, vorzugsweise an einer entlang einer parallel zur Drehachse 28a ausgerichteten Richtung ausgebildeten Seite der Innenflächen 66a um die Drehachse 28a betrachtet zumindest im Wesentlichen vollständig. Die äußere Kante 68a des Abdeckelements 46a bildet eine maximale radiale Erstreckung des Abdeckelements 46a um die Mittelachse 52a des Abdeckelements 46a aus. Die äußere Kante 68a des Abdeckelements 46a weist entlang der Mittelachse 52a des Abdeckelements 46a betrachtet eine kreisrunde Form auf. Die gemeinsame Ebene der Außenfläche 48a des Abdeckelements 46a und der Seitenfläche 62a der Rolle 22a ist zumindest im Wesentlichen senkrecht zur Drehachse 28a ausgerichtet. Bevorzugt ist die Außenfläche 48a des Abdeckelements 46a entlang der äußeren Kante 68a des Abdeckelements 46a bündig mit der, insbesondere äußeren, Seitenfläche 62a der Rolle 22a angeordnet. Die Seitenfläche 62a der Rolle 22a ist in einem der äußeren Kante 68a des Abdeckelements 46a zugewandten Randbereich der Seitenfläche 62a zumindest im Wesentlichen senkrecht zur Drehachse 28a ausgerichtet. Die Rolle 22a umfasst an zwei voneinander abgewandten Seiten jeweils eine äußere Seitenfläche 62a, wobei die Außenflächen 48a der zwei Abdeckelemente 46a jeweils entlang einer äußeren Kante 68a des die jeweilige Außenfläche 48a ausbildenden Abdeckelements 46a an jeder Stelle um die Drehachse 28a in einer gemeinsamen Ebene mit einer der, insbesondere äußeren, Seitenflächen 62a der Rolle 22a angeordnet sind.

Die Rolle 22a begrenzt über die zwei Innenflächen 66a der Rolle 22a jeweils eine Ausnehmung 70a. Die Rolle 22a begrenzt die zwei Ausnehmungen 70a, wobei die Rolle 22a dazu vorgesehen ist, die zwei Abdeckelemente 46a über die Ausnehmungen 70a zumindest im Wesentlichen vollständig aufzunehmen. Die Abdeckelemente 46a sind beabstandet von der Rolle 22a ausgebildet. Die Ausnehmungen 70a der Rolle 22a erstrecken sich an einer Stirnseite der Rolle 22a um eine Mittelachse 72a der Rolle 22a bzw. um die Drehachse 28a. Insbesondere umfasst die Drehachse 28a die Mittelachse 72a der Rolle 22a in dem montierten Zustand. Die Rolle 22a ist dazu vorgesehen, die zwei Abdeckelemente 46a über die zwei Ausnehmungen 70a derart aufzunehmen, dass die Abdeckelemente 46a, insbesondere jeweils mit Ausnahme eines sich entlang der Drehachse 28a über die Außenfläche 48a hinaus erstreckenden Bereichs der Wandung 58a des Abdeckelements 46a, jeweils vollständig innerhalb einer der zwei Ausnehmungen 70a angeordnet sind. Die Rolle 22a begrenzt zwei weitere Ausnehmungen 74a zu einer Aufnahme der Lagereinheit 26a. Die Lagereinheit 26a umfasst zwei Kugellager 76a. Die zwei weiteren Ausnehmungen 74a sind zumindest größtenteils von der Rolle 22a umschlossen. Die zwei weiteren Ausnehmungen 74a sind jeweils über eine Innenwand 78a der Rolle 22a von den Ausnehmungen 70a der Rolle 22a getrennt. Die zwei weiteren Ausnehmungen 74a erstrecken sich jeweils vollständig um die Mittelachse 72a der Rolle 22a bzw. um die Drehachse 28a, wobei insbesondere die Mittelachse 72a der Rolle 22a bzw. die Drehachse 28a durch die weitere Ausnehmung 74a verläuft. Die Rolle 22a begrenzt eine Durchführung 80a zu einer Aufnahme des Rollenachsenelements 40a. Das Rollenachsenelement 40a erstreckt sich in einem montierten Zustand der Lenkrollenvorrichtung 16a durch die Durchführung 80a parallel zur Drehachse 28a über eine maximale Breite 82a der Rolle 22a. Die maximale Breite 82a der Rolle 22a beträgt insbesondere mindestens 3 cm, vorzugsweise mindestens 4 cm und bevorzugt mindestens 5 cm, und/oder höchstens 20 cm, vorzugsweise höchstens 15 cm und bevorzugt höchstens 10 cm. Insbesondere sind die zwei Ausnehmungen 70a der Rolle 22a und die zwei weiteren Ausnehmungen 74a der Rolle 22a über die Durchführung 80a der Rolle 22a miteinander verbunden. Die Durchführung 80a der Rolle 22a weist eine zumindest im Wesentlichen zylinderförmige Grundform auf, wobei insbesondere eine Symmetrieachse der Grundform auf der Drehachse 28a liegt. Die Durchführung 80a der Rolle 22a erstreckt sich entlang der Mittelachse 72a der Rolle 22a bzw. entlang der Drehachse 28a. Die zwei Ausnehmungen 70a der Rolle 22a weisen jeweils eine zumindest im Wesentlichen zylinderförmige Grundform auf, wobei insbesondere eine Symmetrieachse der Grundform auf der Drehachse 28a liegt. Die zwei weiteren Ausnehmungen 74a der Rolle 22a weisen jeweils eine zumindest im Wesentlichen zylinderförmige Grundform auf, wobei insbesondere eine Symmetrieachse der Grundform auf der Drehachse 28a liegt. Vorzugsweise weisen die Ausnehmungen 70a der Rolle 22a parallel zur Drehachse 28a eine maximale Tiefe 84a von mindestens 5 mm, vorzugsweise mindestens 6 mm und bevorzugt mindestens 7 mm, auf. Vorzugsweise weisen die weiteren Ausnehmungen 74a der Rolle 22a parallel zur Drehachse 28a eine maximale Tiefe 86a von mindestens 6 mm, vorzugsweise mindestens 7 mm und bevorzugt mindestens 8 mm, auf. Die Rolle 22a ist aus zwei Teilstücken 88a gebildet, wobei insbesondere jedes Teilstück 88a der Rolle 22a eine der zwei weiteren Ausnehmungen 70a, eine der zwei weiteren Ausnehmungen 74a und zumindest einen Teil der Durchführung 80a begrenzt. In einem montierten Zustand der Teilstücke 88a der Rolle 22a sind die zwei weiteren Ausnehmungen 74a aneinander angeordnet. Bevorzugt bildet das Rollenachsenelement 40a zwei Fortsätze 90a aus, welche jeweils dazu vorgesehen sind, ein Kugellager 76a der Lagereinheit 26a innerhalb der weiteren Ausnehmungen 74a der Rolle 22a zu fixieren. Bevorzugt sind die Fortsätze 90a des Rollenachsenelements 40a in einem Mittelbereich des Rollenachsenelements 40a angeordnet, welcher in dem montierten Zustand der Lenkrollenvorrichtung 16a innerhalb der zwei weiteren Ausnehmungen 74a der Rolle 22a angeordnet ist. Alternativ ist denkbar, dass das Rollenachsenelement 40a lediglich einen Fortsatz 90a ausbildet, welcher die beiden Kugellager 76a fixiert.

Die zwei Abdeckelemente 46a weisen jeweils, insbesondere angrenzend an den radialen Randbereich 50a des jeweiligen Abdeckelements 46a, eine zumindest im Wesentlichen parallel zur Mittelachse 52a des jeweiligen Abdeckelements 46a ausgerichtete Seitenfläche 92a auf, welche parallel zur Mittelachse 52a des jeweiligen Abdeckelements 46a eine maximale Erstreckung 94a von mindestens 4 mm, vorzugsweise mindestens 5 mm und bevorzugt mindestens 6 mm, aufweist. Die Seitenfläche 92a des Abdeckelements 46a bildet entlang der Mittelachse 52a des Abdeckelements 46a betrachtet die äußere Kontur 54a des Abdeckelements 46a aus. Das Abdeckelement 46a umfasst entlang des radialen Randbereichs 50a um die Mittelachse 52a des Abdeckelements 46a eine Seitenwandung 96a, welche parallel zur Mittelachse 52a des Abdeckelements 46a die maximale Erstreckung 94a von mindestens 4 mm, vorzugsweise mindestens 5 mm und bevorzugt mindestens 6 mm, aufweist. Die Seitenwandung 96a des Abdeckelements 46a bildet die Seitenfläche 92a aus. Die Seitenflächen 92a der Abdeckelemente 46a sind jeweils zumindest im Wesentlichen zylindermantelförmig ausgebildet. Die Seitenfläche 92a erstreckt sich vollständig um die Mittelachse 52a des Abdeckelements 46a und weist vorzugsweise parallel zur Mittelachse 52a des Abdeckelements 46a eine gleichbleibende maximale Erstreckung 94a auf. Die Seitenflächen 92a bzw. die Seitenwandungen 96a der Abdeckelemente 46a verlaufen über die gesamte maximale Erstreckung 94a der Seitenflächen 92a zumindest im Wesentlichen parallel zu einer der, insbesondere eine der Ausnehmungen 70a der Rolle 22a begrenzenden, Innenflächen 66a der Rolle 22a. Bevorzugt sind die Seitenflächen 92a bzw. die Seitenwandungen 96a der Abdeckelemente 46a, insbesondere in dem montierten Zustand, senkrecht zur Drehachse 28a betrachtet zumindest im Wesentlichen vollständig innerhalb einer der Ausnehmungen 70a der Rolle 22a angeordnet. Bevorzugt ist ein Abstand zwischen einer Seitenfläche 92a bzw. einer Seitenwandung 96a eines der Abdeckelemente 46a und einer die das jeweilige Abdeckelement 46a aufnehmende Ausnehmung 70a der Rolle 22a begrenzenden Innenfläche 66a der Rolle 22a über die gesamte maximale Erstreckung 94a der Seitenfläche 92a bzw. der Seitenwandung 96a zumindest im Wesentlichen gleich ausgebildet. Es ist auch denkbar, dass der Abstand zwischen der Seitenfläche 92a bzw. der Seitenwandung 96a der Rolle 22a und der jeweiligen Innenfläche 66a der Rolle 22a in eine parallel zur Drehachse 28a ausgerichtete und von der Außenfläche 48a des Abdeckelements 46a zu einer senkrecht zur Drehachse 28a ausgerichteten Haupterstreckungsebene 98a der Rolle 22a zeigende Richtung abnimmt.

Die Abdeckelemente 46a begrenzen jeweils eine Ausnehmung 100a, welche an einer der Außenfläche 48a abgewandten Seite des jeweiligen Abdeckelements 46a angeordnet ist und sich beabstandet von der Mittelachse 52a des jeweiligen Abdeckelements 46a zumindest im Wesentlichen vollständig um die Mittelachse 52a des Abdeckelements 46a erstreckt. Die Ausnehmungen 100a der Abdeckelemente 46a erstrecken sich jeweils von der Wandung 58a der Abdeckelemente 46a zu der Seitenwandung 96a der Abdeckelemente 46a. Eine parallel zur Drehachse 28a und/oder zur Mittelachse 52a des Abdeckelements 46a ausgerichtete maximale Tiefe 102a der Ausnehmung 100a des Abdeckelements 46a beträgt mindestens 2 mm, vorzugsweise mindestens 2,5 mm und bevorzugt mindestens 3 mm. Bevorzugt ist die parallel zur Drehachse 28a und/oder zur Mittelachse 52a des Abdeckelements 46a ausgerichtete maximale Tiefe 102a der Ausnehmung 100a des Abdeckelements 46a größer als eine maximale Wandstärke des Abdeckelements 46a. Vorzugsweise beträgt die parallel zur Drehachse 28a und/oder zur Mittelachse 52a des Abdeckelements 46a ausgerichtete maximale Tiefe 102a der Ausnehmung 100a des Abdeckelements 46a mindestens 50 % der maximalen Erstreckung der Seitenfläche 92a bzw. der Seitenwandung 96a des Abdeckelements 46a. Die durch die Abdeckelemente 46a begrenzten Ausnehmungen 100a sind von der Seitenwandung 96a, einer die Außenfläche 48a des Abdeckelements 46a ausbildenden Hauptseitenwandung 104a des Abdeckelements 46a und der die Aussparung 56a begrenzenden Wandung 58a des Abdeckelements 46a begrenzt. Insbesondere ist die durch das Abdeckelement 46a begrenzte Ausnehmung 100a in eine der Außenfläche 48a abgewandte Richtung bzw. eine der Rolle 22a zugewandte Richtung zumindest teilweise offen ausgebildet. Insbesondere sind/ist die Seitenwandung 92a und/oder die Wandung 58a des Abdeckelements 46a direkt an der Hauptseitenwandung 104a angeordnet.

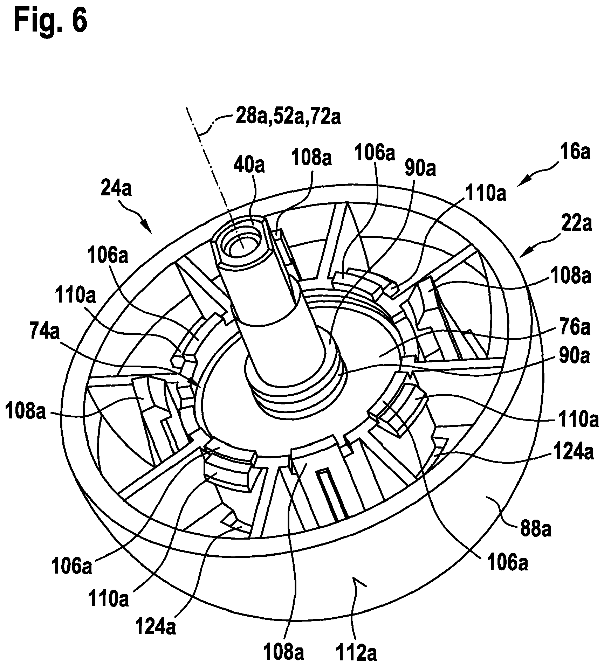

Die Rolle 22a, insbesondere die Teilstücke 88a der Rolle 22a, ist vorzugsweise aus einem Kunststoff ausgebildet. Es sind aber auch andere Ausgestaltungen der Rolle 22a denkbar, beispielsweise aus einem Metall. Die Rolle 22a ist zweiteilig ausgebildet, wobei die Teilstücke 88a der Rolle 22a gegen eine zumindest im Wesentlichen parallel zur Drehachse 28a ausgerichtete Relativbewegung über eine Rastverbindung aneinander fixierbar sind. Die Teilstücke 88a der Rolle 22a sind gegen eine Relativbewegung um die Drehachse 28a über einen Formschluss, insbesondere über zumindest zwei Formschlussfortsätze 106a, aneinander fixierbar. Die Rolle 22a ist aus zwei Teilstücken 88a zusammengesetzt. In Figur 6 ist eine bessere Ansicht eines Teilstücks 88a der Rolle 22a gezeigt. Jedes Teilstück 88a der Rolle 22a bildet Rastelemente 108a und Gegenrastelemente 110a, welche insbesondere die Rastverbindung bilden, aus, welche dazu vorgesehen sind, bei einer Montage der Rolle 22a mit Rastelementen 108a bzw. Gegenrastelementen 110a des jeweils anderen Teilstücks 88a der Rolle 22a zusammenwirken. Die Rolle 22a, insbesondere die Teilstücke 88a der Rolle 22a, bilden eine Abrollfläche 112a aus, die dazu vorgesehen ist, zu einer Fortbewegung des Rasenmähers 10a mit einem Untergrund zusammenzuwirken. Die Abrollfläche 112a erstreckt sich vollständig um die Mittelachse 72a der Rolle 22a bzw. die Drehachse 28a. Die Teilstücke 88a der Rolle 22a bilden jeweils die Abrollfläche 112a zumindest teilweise aus. Besonders bevorzugt bilden die zwei Teilstücke 88a der Rolle 22a jeweils eine Hälfte der Abrollfläche 112a aus. Eine Berührungskante der zwei Teilstücke 88a der Rolle 22a auf der Abrollfläche 112a erstreckt sich zumindest im Wesentlichen vollständig innerhalb der parallel zur Drehachse 28a bzw. zur Mittelachse der Rolle 22a ausgerichteten Haupterstreckungsebene 98a der Rolle 22a. Die Rastverbindung ist innerhalb der Rolle 22a angeordnet. Insbesondere sind die Rastelemente 108a und die Gegenrastelemente 110a dazu vorgesehen, zur Fixierung der Teilstücke 88a der Rolle 22a gegen eine zumindest im Wesentlichen parallel zur Drehachse 28a ausgerichtete Relativbewegung ineinander zu greifen, wobei vorzugsweise die Teilstücke 88a der Rolle 22a zumindest formschlüssig miteinander verbunden werden. Bevorzugt sind die Teilstücke 88a der Rolle 22a, insbesondere die Rastelemente 108a und die Gegenrastelemente 110a, derart ausgebildet, dass die Teilstücke 88a der Rolle 22a über eine Bewegung entlang der Mittelachse 72a der Rolle 22a, insbesondere entlang der koaxial zueinander ausgerichteten Mittelachsen der Teilstücke 88a der Rolle 22a, miteinander verbindbar sind.

Die Rastelemente 108a sind dazu vorgesehen, gegen eine Bewegung der Teilstücke 88a relativ zueinander um die Drehachse 28a und/oder um die Mittelachse 72a der Rolle 22a jeweils formschlüssig an zumindest einer Innenwand eines der Teilstücke 88a der Rolle 22a anzugreifen. Zusätzlich bilden die Teilstücke 88a der Rolle 22a jeweils mehrere Formschlussfortsätze 106a aus (siehe Figur 6). Der Formschlussfortsätze 106a sind dazu vorgesehen, gegen eine Bewegung der Teilstücke 88a relativ zueinander um die Drehachse 28a und/oder um die Mittelachse 72a der Rolle 22a formschlüssig an zumindest einer Innenwand eines der Teilstücke 88a der Rolle 22a anzugreifen. Vorzugsweise sind die Teilstücke 88a der Rolle 22a über die Rastelemente 108a und die Formschlussfortsätze 106a gegen eine Relativbewegung um die Drehachse 28a aneinander fixierbar. Die Teilstücke 88a der Rolle 22a bilden jeweils eine Anliegefläche aus, welche sich um die Mittelachse 72a der Rolle 22a bzw. die Drehachse 28a erstreckt. Die zwei Teilstücke 88a der Rolle 22a liegen in dem montierten Zustand der Rolle 22a, wobei insbesondere die zwei Teilstücke 88a aneinander befestigt sind, über die Anliegeflächen in eine zumindest im Wesentlichen parallel zur Drehachse 28a bzw. zur Mittelachse 72a der Rolle 22a ausgerichtete Richtung aneinander an. Bevorzugt liegen die zwei Teilstücke 88a der Rolle 22a in einem Bereich der Abrollfläche 112a und/oder einem Bereich von die Abrollfläche 112a ausbildenden Außenwandungen der Teilstücke 88a über die Anliegefläche aneinander an. Die Anliegefläche erstreckt sich zumindest größtenteils innerhalb der senkrecht zur Drehachse 28a ausgerichteten Haupterstreckungsebene 98a der Rolle 22a. Die Rastelemente 108a erstrecken sich senkrecht zur Mittelachse 72a der Rolle 22a bzw. zur Drehachse 28a betrachtet um mindestens 0,2 cm, vorzugsweise mindestens 0,4 cm und bevorzugt um mindestens 0,5 cm, über die Anliegefläche und/oder die senkrecht zur Drehachse 28a ausgerichtete Haupterstreckungsebene 98a der Rolle 22a hinaus.

Die Rolle 22a umschließt die Lagereinheit 26a, insbesondere in einem montierten Zustand der Rolle 22a, zumindest größtenteils, insbesondere zumindest im Wesentlichen vollständig. Die Lagereinheit 26a, insbesondere die Kugellager 76a, sind in dem montierten Zustand der Lenkrollenvorrichtung 16a innerhalb der weiteren Ausnehmungen 74a angeordnet. Die Teilstücke 88a der Rolle 22a bilden jeweils eine Innenwand 78a aus, welche eine der weiteren Ausnehmungen 74a begrenzt. Bevorzugt sind die Innenwände 78a der Teiltücke 88a der Rolle 22a dazu vorgesehen, jeweils ein Kugellager 76a der Lagereinheit 26a über einen Formschluss gegen eine Bewegung in eine zumindest im Wesentlichen parallel zur Mittelachse 72a der Rolle 22a bzw. zur Drehachse 28a ausgerichtete Richtung an der Rolle 22a, insbesondere dem Teilstück 88a der Rolle 22a, zu fixieren. Die Kugellager 76a der Lagereinheit 26a sind in dem montierten Zustand der Lenkrollenvorrichtung 16a jeweils über eine der Innenwände 78a der Teilstücke 88a der Rolle 22a und über einen der Fortsätze 90a des Rollenachsenelements 40a gegenüber einer Bewegung der Kugellager 76a relativ zur Rolle 22a fixiert. Die Innenwände 78a der Rolle 22a sind jeweils zwischen einer der Ausnehmungen 70a der Rolle 22a und einer der weiteren Ausnehmungen 74a der Rolle 22a angeordnet. Insbesondere sind die Innenwände 78a der Rolle 22a jeweils zumindest größtenteils zumindest im Wesentlichen senkrecht zur Drehachse 28a bzw. zur Mittelachse 72a der Rolle 22a ausgerichtet. Es ist auch denkbar, dass die Lagereinheit 26a, insbesondere die Kugellager 76a, zwischen der Rolle 22a und den Abdeckelementen 46a angeordnet ist, wobei beispielsweise die Kugellager 76a jeweils zwischen der Rolle 22a und einem der Abdeckelemente 46a angeordnet sind. Insbesondere ist denkbar, dass die Lagereinheit 26a, insbesondere die Kugellager 76a, gegen eine Bewegung entlang der Drehachse 28a lediglich von dem Rollenachsenelement 40a gehalten wird.

Die Antiblockiereinheit 30a umfasst zwei Abschirmelemente 116a (siehe Figur 4), welche jeweils zwischen der Rolle 22a und einem der Abdeckelemente 46a angeordnet sind und drehfest an der Rolle 22a fixiert sind, wobei die Abschirmelemente 116a dazu vorgesehen sind, ein Eindringen von Fremdkörpern, insbesondere Schmutz, in einen von der Rolle 22a begrenzten Zwischenraum zu verhindern (bezüglich einer Ausgestaltung der Abschirmelemente siehe auch Figur 4).

In Figur 3 ist eine perspektivische Ansicht der Rolle 22a mit einem an der Rolle 22a angeordneten Abdeckelement 46a gezeigt. Die Außenflächen 48a der Abdeckelemente 46a erstrecken sich jeweils entlang der Drehachse 28a und/oder der Mittelachse 52a des Abdeckelements 46a betrachtet über mindestens 80% einer maximalen Querschnittsfläche des die jeweilige Außenfläche 48a aufweisenden Abdeckelements 46a. Insbesondere umfasst die maximale Querschnittsfläche des Abdeckelements 46a nicht den über die Aussparung 56a entnommenen Bereich des Abdeckelements 46a. Die Außenfläche 48a des Abdeckelements 46a erstreckt sich entlang der Drehachse 28a und/oder der Mittelachse 52a des Abdeckelements 46a betrachtet mit Ausnahme der Wandung 58a zumindest im Wesentlichen vollständig über die gesamte maximale Querschnittsfläche des Abdeckelements 46a. Die Abdeckelemente 46a weisen jeweils eine abgerundete äußere Kante 68a zwischen der Außenfläche 48a und der Seitenfläche 92a auf. Es ist denkbar, dass die Abdeckelemente 46a an der äußeren Kante 68a eine Fase ausbilden. Insbesondere verläuft die äußere Kante 68a entlang der äußeren Kontur 54a der Abdeckelemente 46a. Der radiale Randbereich 50a erstreckt sich entlang der Mittelachse 52a des Abdeckelements 46a betrachtet von der äußeren Kontur 54a bzw. der Kante 68a des Abdeckelements 46a radial zur Mittelachse 52a des Abdeckelements 46a hin über mindestens 0,5 cm, vorzugsweise mindestens 1 cm und bevorzugt mindestens 1,5 cm. Der radiale Randbereich 50a weist entlang der Mittelachse 52a des Abdeckelements 46a betrachtet eine zumindest im Wesentlichen kreisringförmige Grundform auf. Der radiale Randbereich 50a erstreckt sich entlang der Mittelachse 52a des Abdeckelements 46a betrachtet zumindest im Wesentlichen vollständig, vorzugsweise in einem Winkel von zumindest im Wesentlichen 360°, um die Mittelachse 52a des Abdeckelements 46a. Der radiale Randbereich 50a des Abdeckelements 46a erstreckt sich insbesondere von der äußeren Kontur 54a bzw. der Kante 68a des Abdeckelements 46a bis zur Wandung 58a des Abdeckelements 46a. Es sind aber auch andere Ausgestaltungen des radialen Randbereichs 50a denkbar, wobei sich der radiale Randbereich 50a beispielsweise lediglich teilweise bis zur Wandung 58a des Abdeckelements 46a erstreckt.

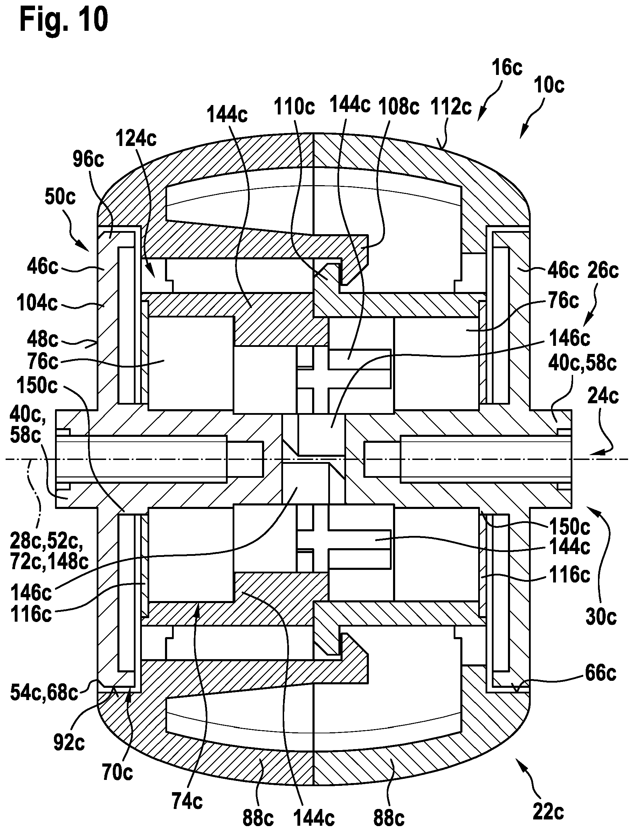

Die Rolle 22a ist über die Lagereinheit 26a um das Rollenachsenelement 40a beweglich gelagert, wobei das zumindest eine Abdeckelement 46a gegen eine Bewegung um die Drehachse 28a über einen Formschluss drehfest an dem Rollenachsenelement 40a fixiert ist. Die Wandung 58a des Abdeckelements 46a und/oder die Aussparung 56a des Abdeckelements 46a weisen/weist entlang der Mittelachse 52a des Abdeckelements 46a betrachtet eine Grundform auf, die durch zwei relativ zur Mittelachse 52a des Abdeckelements 46a gegenüberliegende kreisbogenförmige Abschnitte und durch zwei jeweils zwischen den kreisbogenförmigen Abschnitten angeordnete relativ zur Mittelachse 52a des Abdeckelements 46a gegenüberliegende gerade Abschnitte gebildet ist. Die Wandung 58a des Abdeckelements 46a und/oder die Aussparung 56a des Abdeckelements 46a sind/ist jeweils gegenüber einer um die Drehachse 28a erfolgenden Bewegung zu einem formschlüssigen Zusammenwirken mit dem Rollenachsenelement 40a vorgesehen. Alternativ ist denkbar, dass die Abdeckelemente 46a beispielsweise einteilig mit einem/dem Rollenachsenelement 40a ausgebildet sind (vgl. Figur 10). Die Abrollfläche 112a der Rolle 22a ist an beiden Seiten entlang der Drehachse 28a von den Seitenflächen 62a der Rolle 22a begrenzt. Die Seitenflächen 62a der Rolle 22a erstrecken sich jeweils zumindest im Wesentlichen vollständig innerhalb einer sich senkrecht zur Drehachse 28a und/oder zur Mittelachse 72a der Rolle 22a erstreckenden Ebene. Es sind auch andere Ausgestaltungen der Rolle 22a denkbar, wobei sich beispielsweise die Abrollfläche 112a bis zu den Ausnehmungen der Rolle 22a erstreckt und jeweils in einem Randbereich 50a die Seitenfläche 62a der Rolle 22a ausbildet.

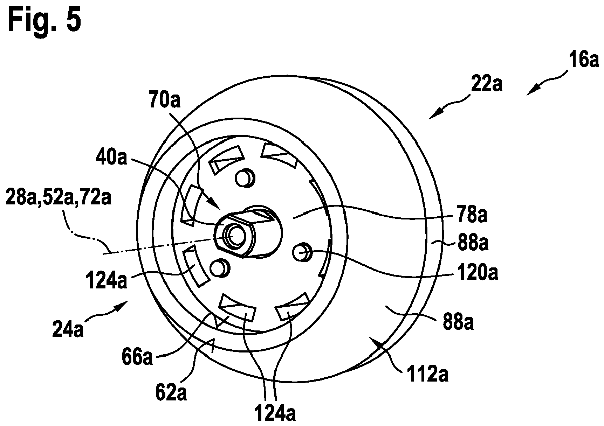

In Figur 4 ist die perspektivische Ansicht der Rolle 22a mit einem der an der Rolle 22a angeordneten Abschirmelemente 116a gezeigt. Die Abschirmelemente 116a sind dazu vorgesehen, jeweils von der Rolle 22a, insbesondere von einem Teilstück 88a der Rolle 22a, begrenzte Öffnungen 124a (siehe Figur 5), insbesondere entlang zumindest einer parallel zur Drehachse 28a ausgerichteten Richtung betrachtet, zumindest im Wesentlichen vollständig zu verdecken. Die Abschirmelemente 116a sind, insbesondere in dem in Figur 4 gezeigten montierten Zustand, jeweils an einer von der Außenfläche 48a des Abdeckelements 46a abgewandten Seite des Abdeckelements 46a an der Rolle 22a angeordnet. Die Abschirmelemente 116a sind an einer dem/einem Abdeckelement 46a zugewandten Seite der Rolle 22a angeordnet. Die Abschirmelemente 116a sind an zwei voneinander abgewandten Seiten der Rolle 22a angeordnet. Die Abschirmelemente 116a begrenzen jeweils eine Aussparung 118a, welche zu einer Durchführung des Rollenachsenelements 40a vorgesehen ist. Insbesondere erstreckt sich die Aussparung 118a der Abschirmelemente 116a jeweils um eine Mittelachse des Abschirmelements 116a und/oder in dem montierten Zustand um die Drehachse 28a. Die Abschirmelemente 116a sind, insbesondere in einem an der Rolle 22a angeordneten Zustand, jeweils beabstandet von dem Rollenachsenelement 40a und/oder den Abdeckelementen 46a angeordnet. Es ist denkbar, dass die Teilstücke 88a der Rolle 22a jeweils eine Senke begrenzen (in Figuren nicht gezeigt), die zur Aufnahme eines der Abschirmelemente 116a vorgesehen ist. Es ist denkbar, dass die Teilstücke 88a der Rolle 22a jeweils eine Innenwandung ausbilden, welche insbesondere die Senke begrenzt und/oder zwischen dem an dem jeweiligen Teilstück 88a der Rolle 22a angeordneten Abschirmelement 116a und dem Rollenachsenelement 40a angeordnet ist und vorzugsweise das an dem jeweiligen Teilstück 88a der Rolle 22a angeordnete Abschirmelement von dem Rollenachsenelement 40a trennt. Die Abschirmelemente sind entlang der Drehachse 28a und/oder der Mittelachse des Abschirmelements betrachtet zumindest im Wesentlichen kreisringförmig ausgebildet. Die Abschirmelemente 116a liegen jeweils an der Rolle 22a, insbesondere einem Teilstück 88a der Rolle 22a, an. Die Abschirmelemente 116a sind jeweils an der Rolle 22a, insbesondere einem Teilstück 88a der Rolle 22a, fixiert. Die Abschirmelemente 116a sind dazu vorgesehen, sich bei einer Bewegung der Rolle 22a um die Drehachse 28a zusammen mit der Rolle 22a um die Drehachse 28a zu bewegen. Bevorzugt sind die zwei Abschirmelemente 116a zumindest im Wesentlichen baugleich ausgebildet. Die Rolle 22a, insbesondere die Teilstücke 88a der Rolle 22a, bilden jeweils drei Fortsätze 120a aus, die dazu vorgesehen sind, eines der Abschirmelemente 116a bei einer Bewegung um die Drehachse 28a formschlüssig an der Rolle 22a, insbesondere dem Teilstück 88a der Rolle 22a, zu halten, wobei insbesondere das Abschirmelement 116a über die Fortsätze 120a um die Drehachse 28a mitbewegt wird. Die Fortsätze 120a der Teilstücke 88a der Rolle 22a sind jeweils als sich zumindest im Wesentlichen parallel zur Drehachse 28a erstreckende Stifte ausgebildet. Die Fortsätze 120a der Teilstücke 88a der Rolle 22a sind gleichmäßig um die Drehachse 28a verteilt, insbesondere in einem Winkel von zumindest im Wesentlichen 120° zueinander relativ zur Drehachse 28a, angeordnet. Die Abschirmelemente 116a begrenzen jeweils drei Aufnahmeausnehmungen 122a zu einer Aufnahme der Fortsätze 120a der Teilstücke 88a der Rolle 22a. Die Aufnahmeausnehmungen 122a der Abschirmelemente 116a sind gleichmäßig um die Drehachse 28a und/oder um eine Mittelachse des Abschirmelements 116a verteilt, insbesondere in einem Winkel von zumindest im Wesentlichen 120° zueinander relativ zur Drehachse 28a, angeordnet. Die Abschirmelemente 116a sind jeweils dazu vorgesehen, bei einer Anordnung an der Rolle 22a, insbesondere einem Teilstück 88a der Rolle 22a, über die Aufnahmeausnehmungen auf die Fortsätze 120a des Teilstücks 88a der Rolle 22a aufgesteckt zu werden. Alternativ oder zusätzlich ist denkbar, dass die Abschirmelemente 116a dazu vorgesehen sind, jeweils über eine Rastverbindung o.dgl. an der Rolle 22a, insbesondere einem Teilstück 88a der Rolle 22a, befestigt zu werden. Alternativ ist denkbar, dass die Abdeckelemente 46a jeweils dazu vorgesehen sind, eines der Abschirmelemente 116a bei einer Anordnung an der Rolle 22a, insbesondere dem Teilstück 88a der Rolle 22a, vorzugsweise über die Ausnehmung 70a der Rolle 22a, an der Rolle 22a, insbesondere dem Teilstück 88a der Rolle 22a, zu halten und/oder zu fixieren. Insbesondere sind die Abdeckelemente 46a dazu vorgesehen, ein Abnehmen des zumindest einen Abschirmelements 116a von der Rolle 22a zu blockieren. Insbesondere ist das Rollenachsenelement 40a zumindest teilweise hohl ausgebildet, wobei eine Aussparung des Rollenachsenelements 40a um die Drehachse 28a bzw. um eine Haupterstreckungsachse des Rollenachsenelements 40a zu einer Aufnahme einer Schraube vorgesehen ist (vgl. Figur 2).

In Figur 5 ist die, insbesondere zuvor gezeigte, perspektivische Ansicht der Rolle 22a gezeigt, insbesondere ohne Abdeckelement 46a und Abschirmelement 116a. Die Teilstücke 88a der Rolle 22a begrenzen jeweils an einer die Ausnehmung 70a begrenzenden Innenwand 78a eine Vielzahl von Öffnungen 124a. Die Öffnungen 124a sind korrespondierend zu den Rastelementen 108a und den Gegenrastelementen 110a (vgl. Figur 6) um die Mittelachse 72a der Rolle 22a verteilt angeordnet. Die Öffnungen 124a sind gleichmäßig verteilt um die Mittelachse 72a der Rolle 22a angeordnet. Die Mittelachse 72a der Rolle 22a umfasst in dem montierten Zustand der Rolle 22a an der Rollenhalteeinheit 24a, insbesondere dem Rollenachsenelement 40a, die Drehachse 28a. Es ist denkbar, dass die Öffnungen 124a einen Zugang von außerhalb der Rolle 22a zu einem Lösen der Rastelemente 108a von den Gegenrastelementen 110a bilden. Zudem kann durch die Öffnungen 124a ein vorteilhaft geringes Gewicht der Rolle 22a, insbesondere der Teilstücke 88a, erreicht werden. Die Öffnungen 124a sind getrennt von den weiteren Ausnehmungen 74a der Rolle 22a, insbesondere der Teilstücke 88a der Rolle 22a, und/oder von der Durchführung 80a der Rolle 22a angeordnet. Die Öffnungen 124a sind entlang der Mittelachse 72a der Rolle 22a bzw. der Drehachse 28a betrachtet beabstandet von den weiteren Ausnehmungen 74a der Rolle 22a, insbesondere der Teilstücke 88a der Rolle 22a, und/oder von der Durchführung 80a der Rolle 22a angeordnet.

In Figur 6 ist eine perspektivische Ansicht eines der Teilstücke 88a der Rolle 22a gezeigt. Jedes der Teilstücke 88a der Rolle 22a bildet vier Rastelemente 108a und vier Gegenrastelemente 110a aus. Die Rastelemente 108a sind insbesondere als hakenförmige Fortsätze ausgebildet, welche dazu vorgesehen sind, formschlüssig in Gegenrastelemente 110a des jeweils anderen Teilstücks 88a einzugreifen. Die Rastelemente 108a sind gleichmäßig um die Mittelachse 72a der Rolle 22a, insbesondere des jeweiligen Teilstücks 88a, bzw. die Drehachse 28a verteilt angeordnet. Die Gegenrastelemente 110a sind gleichmäßig um die Mittelachse 72a der Rolle 22a, insbesondere des jeweiligen Teilstücks 88a, bzw. die Drehachse 28a verteilt angeordnet. Die Rastelemente 108a und die Gegenrastelemente 110a der Teilstücke 88a der Rolle 22a sind um die Mittelachse 72a der Rolle 22a, insbesondere des jeweiligen Teilstücks 88a, bzw. die Drehachse 28a beabstandet voneinander und versetzt zueinander angeordnet. Insbesondere ist ein Versatzwinkel der Rastelemente 108a zueinander um die Mittelachse 72a der Rolle 22a, insbesondere des jeweiligen Teilstücks 88a der Rolle 22a, bzw. die Drehachse 28a zumindest im Wesentlichen identisch zu einem Versatzwinkel der Gegenrastelemente 110a zueinander um die Mittelachse 72a der Rolle 22a, insbesondere des jeweiligen Teilstücks 88a der Rolle 22a, bzw. die Drehachse 28a. Insbesondere bilden die Teilstücke 88a der Rolle 22a jeweils eine Mehrzahl von Streben aus, die sich von einer die weitere Ausnehmung 74a des jeweiligen Teilstücks 88a der Rolle 22a begrenzenden Innenwand des Teilstücks 88a der Rolle 22a, insbesondere jeweils zwischen einem der Rastelemente 108a und einem der Gegenrastelemente 110a, bis zu einer die Abrollfläche 112a ausbildenden Außenwand des Teilstücks 88a erstrecken.

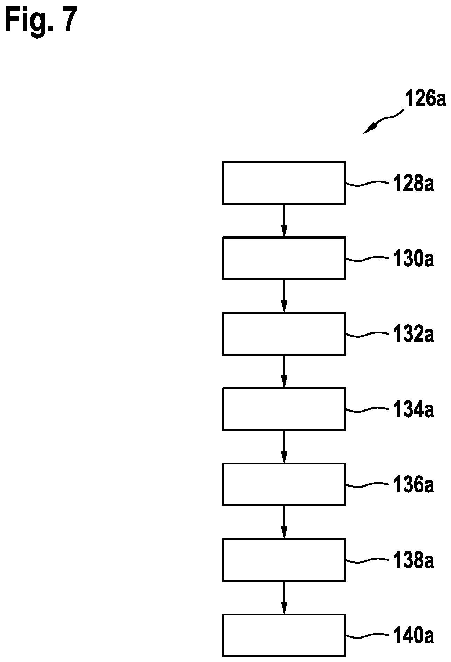

In Figur 7 ist ein beispielhafter Ablauf eines Verfahrens 126a zu einer Montage der Lenkrollenvorrichtung 16a gezeigt. In einem Verfahrensschritt 128a des Verfahrens 126a wird ein Kugellager 76a der Lagereinheit 26a in ein Teilstück 88a der Rolle 22a, insbesondere eine der weiteren Ausnehmungen 74a der Rolle 22a, eingelegt. In einem weiteren Verfahrensschritt 130a des Verfahrens 126a wird das Rollenachsenelement 40a über die Durchführung 80a der Rolle 22a, insbesondere des Teilstücks 88a der Rolle 22a, an dem Teilstück 88a und dem Kugellager 76a angeordnet. Insbesondere wird das Kugellager 76a über das Rollenachsenelement 40a an dem Teilstück 88a der Rolle 22a fixiert. In einem weiteren Verfahrensschritt 132a des Verfahrens 126a wird ein weiteres Kugellager 76a der Lagereinheit 26a in ein anderes Teilstück 88a der Rolle 22a, insbesondere eine der weiteren Ausnehmungen 74a der Rolle 22a, eingelegt und zusammen mit dem anderen Teilstück 88a der Rolle 22a auf das Rollenachsenelement 40a gesteckt, wobei das Teilstück 88a und das andere Teilstück 88a der Rolle 22a über die Rastverbindung, insbesondere die Rastelemente 108a und die Gegenrastelemente 110a sowie die Formschlussfortsätze 106a miteinander verbunden werden. In einem weiteren Verfahrensschritt 134a des Verfahrens 126a werden die Abschirmelemente 116a über die Aufnahmeausnehmungen 122a und die Fortsätze 120a der Teilstücke 88a der Rolle 22a an der Rolle 22a angeordnet. In einem weiteren Verfahrensschritt 136a des Verfahrens 126a werden die Abdeckelemente 46a über die Aussparungen 56a der Abdeckelemente 46a jeweils an beiden Stirnseiten der Rolle 22a auf das Rollenachsenelement 40a aufgesteckt. In einem weiteren Verfahrensschritt 138a des Verfahrens 126a werden die Rolle 22a, die Lagereinheit 26a, die Abdeckelemente 46a und das Rollenachsenelement 40a zusammen über das Rollenachsenelement 40a an der Aufhängung 38a befestigt, insbesondere über eine Schraubverbindung (vgl. Figur 2). In zumindest einem weiteren Verfahrensschritt 140a des Verfahrens 126a wird die Aufhängung 38a über die Lenkrollenlagereinheit 32a, insbesondere den Lagerbolzen 36a und die den Lagerbolzen 36a aufnehmende Lageraufnahme 34a der Lenkrollenlagereinheit 32a, welche an der Aufhängung 38a befestigt ist, an dem Rasenmäher 10a befestigt, wobei die Rollenhalteeinheit 24a und die Rolle 22a zusammen um eine Lenkachse 18a drehbar gelagert am Rasenmäher 10a angeordnet werden.

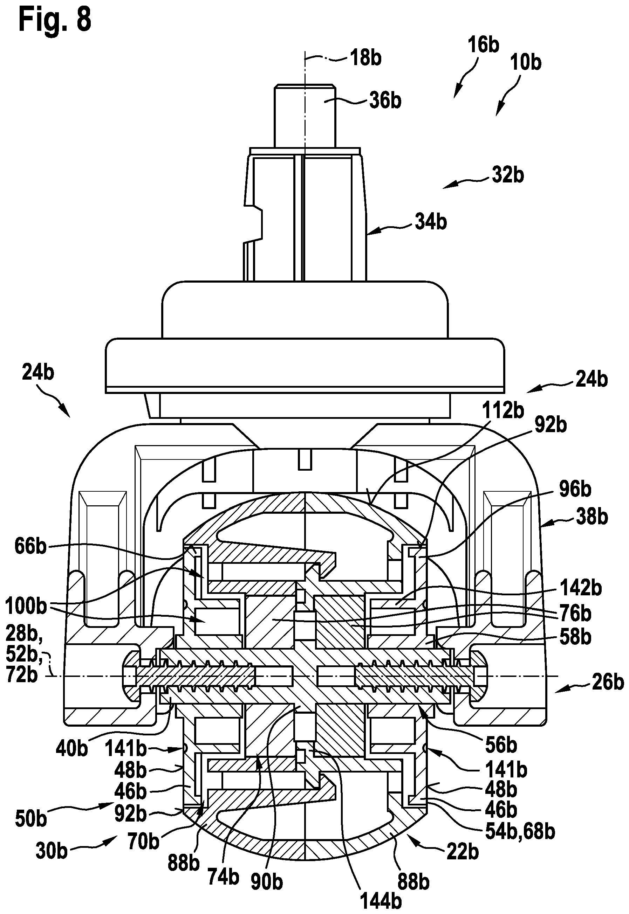

In den Figuren 8 bis 10 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere des Ausführungsbeispiels der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 10 ist der Buchstabe a durch die Buchstaben b und c ersetzt.

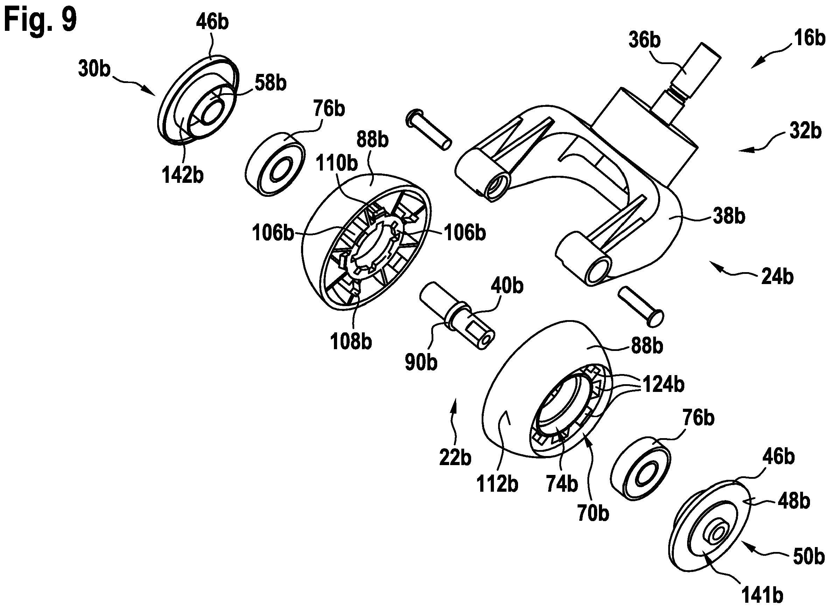

In den Figuren 8 und 9 ist eine alternative Ausgestaltung einer Lenkrollenvorrichtung 16b gezeigt. Die Lenkrollenvorrichtung 16b ist zu einer Anordnung an einem fahrbaren Gerät, vorzugsweise an einem Rasenmäher 10b, vorgesehen. Die Lenkrollenvorrichtung 16b umfasst eine Rolle 22b, eine Rollenhalteeinheit 24b, welche die Rolle 22b zumindest teilweise umgreift, eine Lagereinheit 26b zu einer beweglichen Lagerung der Rolle 22b an der Rollenhalteeinheit 24b um eine Drehachse 28b, und eine Antiblockiereinheit 30b, die dazu vorgesehen ist, einer unerwünschten Blockierung der Rolle 22b durch Fremdkörper, insbesondere infolge einer Verschmutzung, entgegenzuwirken. Die Antiblockiereinheit 30b umfasst zwei Abdeckelemente 46b, die jeweils dazu vorgesehen sind, die Rolle 22b und die Lagereinheit 26b entlang zumindest einer zumindest im Wesentlichen parallel zur Drehachse 28b ausgerichteten Richtung jeweils zumindest teilweise zu verdecken. Die Abdeckelemente 46b sind relativ zur Rollenhalteeinheit 24b um die Drehachse 28b zumindest im Wesentlichen unbeweglich ausgebildet. Die Abdeckelemente 46b weisen jeweils eine Außenfläche 48b auf, die in einem radialen Randbereich 50b des jeweiligen Abdeckelements 46b, welcher sich zumindest im Wesentlichen vollständig um eine Mittelachse 52b des Abdeckelements 46b erstreckt, um die Mittelachse 52b des Abdeckelements 46b rotationssymmetrisch ausgebildet ist. In Figur 8 ist eine geschnittene Seitenansicht der Lenkrollenvorrichtung 16b senkrecht zur Drehachse 28b gezeigt, wobei insbesondere die Lenkrollenvorrichtung 16b entlang der Drehachse 28b geschnitten dargestellt ist. In Figur 9 ist eine Explosionsskizze der Lenkrollenvorrichtung 16b gezeigt. Die in den Figuren 8 und 9 dargestellte Lenkrollenvorrichtung 16b weist eine zumindest im Wesentlichen analoge Ausgestaltung zu der in der Beschreibung der Figuren 1 bis 7 beschriebenen Lenkrollenvorrichtung 16a auf, so dass bezüglich einer Ausgestaltung der in den Figuren 8 und 9 dargestellten Lenkrollenvorrichtung 16b zumindest im Wesentlichen auf die Beschreibung der Figuren 1 bis 7 verwiesen werden kann. Im Unterschied zu der in der Beschreibung der Figuren 1 bis 7 beschriebenen Lenkrollenvorrichtung 16a umschließt die Rolle 22b der in den Figuren 8 und 9 gezeigten Lenkrollenvorrichtung 16b die Lagereinheit 26b lediglich zu einem Großteil, wobei die Lagereinheit 26b, insbesondere Kugellager 76b der Lagereinheit 26b, jeweils an einer Stirnseite der Rolle 22b von einem der Abdeckelemente 46b verdeckt wird. Bevorzugt begrenzen die Abdeckelemente 46b jeweils an einer der Außenfläche 48b des jeweiligen Abdeckelements 46b abgewandten Seite jeweils zwei Ausnehmungen 100b, die sich getrennt voneinander um die Aussparung 56b der Abdeckelemente 46b erstrecken. Die Ausnehmungen 100b bilden zusammen mit der Rolle 22b jeweils einen Zwischenraum zwischen der Rolle 22b und dem die Ausnehmungen 100b begrenzenden Abdeckelement 46b. Die Abdeckelemente 46b bilden jeweils eine weitere Innenwand 142b aus, die entlang einer Mittelachse 52b des Abdeckelements 46b betrachtet kreisförmig um die Mittelachse 52b des Abdeckelements 46b verläuft. Die weiteren Innenwände 142b der Abdeckelemente 46b unterteilen jeweils die zwei von den einzelnen Abdeckelementen 46b begrenzten Ausnehmungen 100b. Insbesondere weist die weitere Innenwand 142b des Abdeckelements 46b jeweils parallel zur Mittelachse 52b des Abdeckelements 46b eine größere maximale Erstreckung auf, wie Seitenwandungen 96b der Abdeckelemente 46b. Bevorzugt erstreckt sich eine Wandung 58b der Abdeckelemente 46b, welche insbesondere eine Aussparung 56b der Abdeckelemente 46b begrenzt, jeweils zumindest im Wesentlichen parallel zur Mittelachse 52b des Abdeckelements 46b bis zu einem Kugellager 76b der Lagereinheit 26b. Insbesondere ist jeweils eine durch ein Teilstück 88b der Rolle 22b begrenzte Ausnehmung 70b zur Aufnahme eines der Abdeckelemente 46b und eine durch das Teilstück 88b der Rolle 22b begrenzte weitere Ausnehmung 74b zur Aufnahme eines Kugellagers 76b der Lagereinheit 26b einstückig ausgebildet bzw. miteinander verbunden. Insbesondere ist jeweils eine durch ein Teilstück 88b der Rolle 22b begrenzte Ausnehmung 70b und jeweils eine durch das Teilstück 88b der Rolle 22b begrenzte weitere Ausnehmung 74b zusammen als eine zylinderförmige Ausnehmung ausgebildet, welche sich von einer Stirnseite der Rolle 22b aus entlang einer Mittelachse 72b der Rolle 22b um die Mittelachse 72b der Rolle 22b erstreckt. Die Rollenhalteeinheit 24b umfasst ein Rollenachsenelement 40b, an dem die Rolle 22b über die Lagereinheit 26b um die Drehachse 28b drehbar gelagert ist. Insbesondere sind die Abdeckelemente 46b jeweils dazu vorgesehen, über die die Aussparung 56b begrenzende Wandung 58b ein Kugellager 76b der Lagereinheit 26b zu fixieren, insbesondere an einem relativ zu der Rollenhalteeinheit 24b, insbesondere einem Rollenachsenelement 40b der Rollenhalteeinheit 24b, unbeweglich ausgebildeten Teil des Kugellagers 76b. Insbesondere bildet die Rolle 22b, insbesondere ein Teilstück 88b der Rolle 22b, zumindest einen Fixierfortsatz 144b zu einem Fixieren eines Kugellagers 76b der Lagereinheit 26b, insbesondere eines relativ zu der Rolle 22b, insbesondere dem Teilstück 88b der Rolle 22b, unbeweglich ausgebildeten Teils des Kugellagers 76b. Die Abdeckelemente 46b, insbesondere die Wandungen 58b der Abdeckelemente 46b, und das Rollenachsenelement 40b sind dazu vorgesehen, den relativ zu der Rollenhalteeinheit 24b, insbesondere dem Rollenachsenelement 40b, unbeweglich ausgebildeten Teil des Kugellagers 76b, insbesondere gegenüber einer Bewegung parallel zur Drehachse 28b, zu fixieren. Die Antiblockiereinheit 30b der in den Figuren 8 und 9 gezeigten Lenkrollenvorrichtung 16b weist im Unterschied zu der in den Figuren 1 bis 7 beschriebenen Lenkrollenvorrichtung 16a keine zusätzlichen Abschirmelemente auf. Es sind jedoch auch Ausgestaltungen der Lenkrollenvorrichtung 16b denkbar, wobei die Antiblockiereinheit 30b Abschirmelemente umfasst, welche insbesondere analog zu den Abschirmelementen 116a der in den Figuren 1 bis 7 beschriebenen Lenkrollenvorrichtung 16a ausgebildet sein können. Die Abdeckelemente 46b begrenzen jeweils im Bereich der Außenflächen 48b eine ringförmige Ausnehmung 141b, welche sich um die Mittelachse des jeweiligen Abdeckelements 46b erstreckt.

In Figur 10 ist eine weitere alternative Ausgestaltung einer Lenkrollenvorrichtung 16c in einer Schnittansicht zumindest teilweise gezeigt. Die Lenkrollenvorrichtung 16c ist zu einer Anordnung an einem fahrbaren Gerät, vorzugsweise an einem Rasenmäher 10c, vorgesehen. Die Lenkrollenvorrichtung 16c umfasst eine Rolle 22c, eine Rollenhalteeinheit 24c, welche die Rolle 22c zumindest teilweise umgreift, eine Lagereinheit 26c zu einer beweglichen Lagerung der Rolle 22c an der Rollenhalteeinheit 24c um eine Drehachse 28c, und eine Antiblockiereinheit 30c, die dazu vorgesehen ist, einer unerwünschten Blockierung der Rolle 22c durch Fremdkörper, insbesondere infolge einer Verschmutzung, entgegenzuwirken. Die Antiblockiereinheit 30c umfasst zwei Abdeckelemente 46c, die jeweils dazu vorgesehen sind, die Rolle 22c und die Lagereinheit 26c entlang zumindest einer zumindest im Wesentlichen parallel zur Drehachse 28c ausgerichteten Richtung jeweils zumindest teilweise zu verdecken. Die Abdeckelemente 46c sind relativ zur Rollenhalteeinheit 24c um die Drehachse 28c zumindest im Wesentlichen unbeweglich ausgebildet. Die Abdeckelemente 46c weisen jeweils eine Außenfläche 48c auf, die in einem radialen Randbereich 50c des jeweiligen Abdeckelements 46c, welcher sich zumindest im Wesentlichen vollständig um eine Mittelachse 52c des Abdeckelements 46c erstreckt, um die Mittelachse 52c des Abdeckelements 46c rotationssymmetrisch ausgebildet ist. Die Lenkrollenvorrichtung 16c ist in Figur 10 entlang der Drehachse 28c geschnitten dargestellt. Die in der Figur 10 dargestellte Lenkrollenvorrichtung 16c weist eine zumindest im Wesentlichen analoge Ausgestaltung zu der in der Beschreibung der Figuren 1 bis 7 beschriebenen Lenkrollenvorrichtung 16a auf, so dass bezüglich einer Ausgestaltung der in der Figur 10 dargestellten Lenkrollenvorrichtung 16c zumindest im Wesentlichen auf die Beschreibung der Figuren 1 bis 7 verwiesen werden kann. Im Unterschied zu der in der Beschreibung der Figuren 1 bis 7 beschriebenen Lenkrollenvorrichtung 16a weist die Rollenhalteeinheit 24c der in der Figur 10 gezeigten Lenkrollenvorrichtung 16c zwei Rollenachsenelemente 40c auf, die dazu vorgesehen sind, zu einer Lagerung der Rolle 22c zusammengefügt zu werden. Die Rolle 22c ist an den Rollenachsenelementen 40c über die Lagereinheit 26c um die Drehachse 28c drehbar gelagert. Die Abdeckelemente 46c sind jeweils einstückig mit einem der zwei Rollenachsenelemente 40c ausgebildet. Die zwei Rollenachsenelemente 40c bilden jeweils an einem der Rolle 22c und/oder dem jeweils anderen Rollenachsenelement 40c zugewandten Seite einen Fortsatz 146c aus, welcher zu einem Zusammenwirken mit dem anderen Rollenachsenelement 40c, insbesondere einem Fortsatz 146c des anderen Rollenachsenelements 40c, vorgesehen ist. Die Rollenachsenelemente 40c sind dazu vorgesehen, über die Fortsätze 146c der Rollenachsenelemente 40c gegenüber einer Bewegung um die Drehachse 28c bzw. eine gemeinsame Mittelachse 148c der Rollenachsenelemente 40c drehfest aneinander fixiert zu werden. Insbesondere sind die zwei Rollenachsenelemente 40c dazu vorgesehen, jeweils über eine Schraubverbindung an einer Aufhängung der Rollenhalteeinheit 24c (in Figur 10 nicht gezeigt) befestigt zu werden. Die Rolle 22c ist aus zwei Teilstücken 88c ausgebildet, welche jeweils eine Ausnehmung 70c zur Aufnahme eines der Abdeckelemente 46c begrenzen. Die Teilstücke 88c der Rolle 22c begrenzen jeweils eine weitere Ausnehmung 74c zu einer Aufnahme eines Kugellagers 76c der Lagereinheit 26c. Die durch die Teilstücke 88c der Rolle 22c begrenzten Ausnehmungen 70c und die durch die Teilstücke 88c der Rolle 22c begrenzten weiteren Ausnehmungen 74c sind jeweils aneinander angeordnet. Die Antiblockiereinheit 30c umfasst zwei Abschirmelemente 116c, welche jeweils dazu vorgesehen sind, ein in einer weiteren Ausnehmung 74c der Rolle 22c angeordnetes Kugellager 76c der Lagereinheit 26c entlang einer Mittelachse 72c der Rolle 22c und/oder der Drehachse 28c betrachtet zumindest größtenteils, insbesondere zumindest im Wesentlichen vollständig, zu verdecken. Insbesondere trennen die Abschirmelemente 116c jeweils die Ausnehmungen 70c von den weiteren Ausnehmungen 74c der Rolle 22c. Die Teilstücke 88c der Rolle 22c bilden jeweils Fixierfortsätze 144c aus, die dazu vorgesehen sind, die Kugellager 76c der Lagereinheit 26c innerhalb der weiteren Ausnehmungen 74c zu fixieren. Die zwei Abdeckelemente 46c, insbesondere Wandungen 58c der Abdeckelemente 46c, und die zwei Rollenachsenelemente 40c der Rollenhalteeinheit 24c sind dazu vorgesehen, die Kugellager 74c jeweils über einen Fortsatz 150c gegen eine Bewegung in eine von der Rolle 22c abgewandte Richtung an der Rolle 22c zu halten, vorzugsweise über einen relativ zu der Rollenhalteeinheit 24c, insbesondere dem Rollenachsenelement 40c, unbeweglich ausgebildeten Teil des Kugellagers 76c. Die Fortsätze 150c der Abdeckelemente 46c bzw. der Rollenachsenelemente 40c sind jeweils an einer, insbesondere der Mittelachse 52c der Abdeckelemente 46c bzw. der Drehachse abgewandten, Außenseite der Wandung 58c der Abdeckelemente 46c bzw. der Rollenachsenelemente 40c angeordnet. Die Rolle 22c, insbesondere die Fixierfortsätze 144c der Teilstücke 88c der Rolle 22c, und die Abschirmelemente 116c sind dazu vorgesehen, einen relativ zu der Rolle 22c, insbesondere dem Rollenachsenelement 40c, unbeweglich ausgebildeten Teil des Kugellagers 76c, insbesondere gegenüber einer Bewegung parallel zur Drehachse 28c, zu fixieren. Vorzugsweise sind die zwei Abschirmelemente 116c drehfest an der Rolle 22c angeordnet. Im Unterschied zu den Abschirmelementen 116a der in der Beschreibung der Figuren 1 bis 7 beschriebenen Lenkrollenvorrichtung 16a sind die Abschirmelemente 116c der in der Figur 10 gezeigten Lenkrollenvorrichtung 16c jeweils dazu vorgesehen, eine der weiteren Ausnehmungen 74c der Rolle 22c zu verdecken und relativ zu einem Zwischenraum zwischen einem Abdeckelement 46c und der Rolle 22c für Fremdkörper zu verschließen.

## Patentansprüche

1. Lenkrollenvorrichtung, insbesondere für einen Rasenmäher, mit zumindest einer, insbesondere genau einer, Rolle (22a; 22b; 22c), mit zumindest einer Rollenhalteeinheit (24a; 24b; 24c), welche die Rolle (22a; 22b; 22c) zumindest teilweise umgreift, mit zumindest einer Lagereinheit (26a; 26b; 26c) zu einer beweglichen Lagerung der Rolle (22a; 22b; 22c) an der Rollenhalteeinheit (24a; 24b; 24c) um eine Drehachse (28a; 28b; 28c), und mit zumindest einer Antiblockiereinheit (30a; 30b; 30c), die dazu vorgesehen ist, einer unerwünschten Blockierung der Rolle (22a; 22b; 22c) durch Fremdkörper, insbesondere infolge einer Verschmutzung, entgegenzuwirken, wobei die Antiblockiereinheit (30a; 30b; 30c) zumindest ein Abdeckelement (46a; 46b; 46c) umfasst, das dazu vorgesehen ist, die Rolle (22a; 22b; 22c) und die Lagereinheit (26a; 26b; 26c) entlang zumindest einer zumindest im Wesentlichen parallel zur Drehachse (28a; 28b; 28c) ausgerichteten Richtung jeweils zumindest teilweise zu verdecken, wobei das zumindest eine Abdeckelement (46a; 46b; 46c) relativ zur Rollenhalteeinheit (24a; 24b; 24c) um die Drehachse (28a; 28b; 28c) zumindest im Wesentlichen unbeweglich ausgebildet ist, **dadurch gekennzeichnet, dass** das Abdeckelement (46a; 46b; 46c) zumindest eine Außenfläche (48a; 48b; 48c) aufweist, die in einem radialen Randbereich (50a; 50b; 50c) des Abdeckelements (46a; 46b; 46c), welcher sich zumindest im Wesentlichen vollständig um eine Mittelachse (52a; 52b; 52c) des Abdeckelements (46a; 46b; 46c) erstreckt, um die Mittelachse (52a; 52b; 52c) des Abdeckelements (46a; 46b; 46c) rotationssymmetrisch ausgebildet ist.

2. Lenkrollenvorrichtung nach Anspruch 1, **dadurch gekennzeichnet, dass** die Außenfläche (48a; 48b; 48c) des Abdeckelements (46a; 46b; 46c) zumindest größtenteils, insbesondere zumindest im Wesentlichen vollständig, zumindest im Wesentlichen senkrecht zur Drehachse (28a; 28b; 28c) ausgerichtet ist.

3. Lenkrollenvorrichtung nach Anspruch 1 oder 2, **dadurch gekennzeichnet, dass** sich die Außenfläche (48a; 48b; 48c) des Abdeckelements (46a; 46b; 46c) entlang der Drehachse (28a; 28b; 28c) und/oder der Mittelachse (52a; 52b; 52c) des Abdeckelements (46a; 46b; 46c) betrachtet über mindestens 50% einer maximalen Querschnittsfläche des Abdeckelements (46a; 46b; 46c) erstreckt.

4. Lenkrollenvorrichtung nach einem der vorhergehenden Ansprüche, **dadurch gekennzeichnet, dass** die Außenfläche (48a; 48b; 48c) des Abdeckelements (46a; 46b; 46c) entlang einer äußeren Kante (68a; 68b; 68c) des Abdeckelements (46a; 46b; 46c) an jeder Stelle um die Drehachse (28a; 28b; 28c) in einer gemeinsamen Ebene mit einer, insbesondere äußeren, Seitenfläche (62a; 62b; 62c) der Rolle (22a; 22b; 22c) angeordnet ist.

5. Lenkrollenvorrichtung nach einem der vorhergehenden Ansprüche, **dadurch gekennzeichnet, dass** die Rolle (22a; 22b; 22c) zumindest eine Ausnehmung (70a; 70b; 70c) begrenzt, wobei die Rolle (22a; 22b; 22c) dazu vorgesehen ist, das zumindest eine Abdeckelement (46a; 46b; 46c) über die Ausnehmung (70a; 70b; 70c) zumindest größtenteils, insbesondere zumindest im Wesentlichen vollständig, aufzunehmen.

6. Lenkrollenvorrichtung nach einem der vorhergehenden Ansprüche, **dadurch gekennzeichnet, dass** das Abdeckelement (46a; 46b; 46c), insbesondere angrenzend an den radialen Randbereich (50a; 50b; 50c) des Abdeckelements (46a; 46b; 46c), eine zumindest im Wesentlichen parallel zur Mittelachse (52a; 52b; 52c) des Abdeckelements (46a; 46b; 46c) ausgerichtete Seitenfläche (92a; 92b; 92c) aufweist, welche parallel zur Mittelachse (52a; 52b; 52c) des Abdeckelements (46a; 46b; 46c) eine maximale Erstreckung (94a) von mindestens 4 mm aufweist.

7. Lenkrollenvorrichtung nach einem der vorhergehenden Ansprüche, **dadurch gekennzeichnet, dass** das Abdeckelement (46a; 46b; 46c) zumindest eine Ausnehmung (100a; 100b; 100c) begrenzt, welche an einer der Außenfläche (48a; 48b; 48c) abgewandten Seite des Abdeckelements (46a; 46b; 46c) angeordnet ist und sich beabstandet von der Mittelachse (52a; 52b; 52c) des Abdeckelements (46a; 46b; 46c) zumindest größtenteils, insbesondere zumindest im Wesentlichen vollständig, um die Mittelachse (52a; 52b; 52c) des Abdeckelements (46a; 46b; 46c) erstreckt.

8. Lenkrollenvorrichtung nach einem der vorhergehenden Ansprüche, **dadurch gekennzeichnet, dass** die Rolle (22a; 22b; 22c) zumindest zweiteilig ausgebildet ist, wobei Teilstücke (88a; 88b; 88c) der Rolle (22a; 22b; 22c) gegen eine zumindest im Wesentlichen parallel zur Drehachse (28a; 28b; 28c) ausgerichtete Relativbewegung über eine Rastverbindung und/oder eine Schraubverbindung aneinander fixierbar sind.

9. Lenkrollenvorrichtung nach einem der vorhergehenden Ansprüche, **dadurch gekennzeichnet, dass** die Rolle (22a; 22b; 22c) zumindest zweiteilig ausgebildet ist, wobei Teilstücke (88a; 88b; 88c) der Rolle (22a; 22b; 22c) gegen eine Relativbewegung um die Drehachse (28a; 28b; 28c) über einen Formschluss, insbesondere über zumindest zwei Formschlussfortsätze (106a), aneinander fixierbar sind.

10. Lenkrollenvorrichtung nach einem der vorhergehenden Ansprüche, **dadurch gekennzeichnet, dass** die Rolle (22a; 22b; 22c) die Lagereinheit (26a; 26b; 26c), insbesondere in einem montierten Zustand der Rolle (22a; 22b; 22c), zumindest größtenteils, insbesondere zumindest im Wesentlichen vollständig, umschließt.

11. Lenkrollenvorrichtung nach einem der vorhergehenden Ansprüche, **dadurch gekennzeichnet, dass** die Rollenhalteeinheit (24a; 24b) zumindest ein Rollenachsenelement (40a; 40b) umfasst, wobei die Rolle (22a; 22b) über die Lagereinheit (26a; 26b) um das Rollenachsenelement (40a; 40b) beweglich gelagert ist, wobei das zumindest eine Abdeckelement (46a; 46b) gegen eine Bewegung um die Drehachse (28a; 28b) über einen Formschluss drehfest an dem zumindest einen Rollenachsenelement (40a; 40b) fixiert ist.

12. Lenkrollenvorrichtung nach einem der Ansprüche 1 bis 10, **dadurch gekennzeichnet, dass** die Rollenhalteeinheit (24c) zumindest ein Rollenachsenelement (40c) umfasst, wobei die Rolle (22c) über die Lagereinheit (26c) um das Rollenachsenelement (40c) beweglich gelagert ist, wobei das zumindest eine Abdeckelement (46c) einteilig mit dem zumindest einen Rollenachsenelement (40c) ausgebildet ist.

13. Lenkrollenvorrichtung nach einem der vorhergehenden Ansprüche, **dadurch gekennzeichnet, dass** die Antiblockiereinheit (30a; 30c) zumindest ein Abschirmelement (116a; 116c) umfasst, welches zwischen der Rolle (22a; 22c) und dem zumindest einen Abdeckelement (46a; 46c) angeordnet ist und drehfest an der Rolle (22a; 22c) fixiert ist, wobei das Abschirmelement (116a; 116c) dazu vorgesehen ist, ein Eindringen von Fremdkörpern, insbesondere Schmutz, in einen von der Rolle (22a; 22c) begrenzten Zwischenraum zu verhindern.

14. Rasenmäher, insbesondere teilautonomer oder vollautonomer Rasenmähroboter, mit zumindest einer Lenkrollenvorrichtung (16a; 16b; 16c) nach einem der vorhergehenden Ansprüche.

15. Verfahren zur Montage einer Lenkrollenvorrichtung (16a; 16b; 16c) nach einem der Ansprüche 1 bis 13.
